(19) Europäisches Patentamt
European Patent Office
Office européen des brevets

(11) EP 4 400 520 A1

(12) # EUROPEAN PATENT APPLICATION
published in accordance with Art. 153(4) EPC

(43) Date of publication:
**17.07.2024 Bulletin 2024/29**

(21) Application number: **22867171.5**

(22) Date of filing: **19.08.2022**

(51) International Patent Classification (IPC):
***C08F 4/80*** *(2006.01)* ***C08F 10/02*** *(2006.01)*

(52) Cooperative Patent Classification (CPC):
**C08F 4/80; C08F 10/02;** Y02P 20/52

(86) International application number:
**PCT/JP2022/031421**

(87) International publication number:
**WO 2023/037849 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2021 JP 2021145657**

(71) Applicants:
- **The University of Tokyo**
  **Bunkyo-ku, Tokyo 113-8654 (JP)**
- **Resonac Corporation**
  **Tokyo 105-7325 (JP)**
- **Japan Polyethylene Corporation**
  **Tokyo 100-8251 (JP)**

(72) Inventors:
- **NOZAKI, Kyoko**
  **Tokyo 113-8654 (JP)**
- **KIMURA, Kento**
  **Oita-shi, Oita 870-0189 (JP)**
- **KURODA, Junichi**
  **Oita-shi, Oita 870-0189 (JP)**
- **HAYASHI, Shinya**
  **Oita-shi, Oita 870-0189 (JP)**
- **NANJO, Shun**
  **Tokyo 105-8518 (JP)**
- **UEMATSU, Masahiro**
  **Kawasaki-shi, Kanagawa 210-8548 (JP)**
- **SAKURAGI, Tsutomu**
  **Yokkaichi-shi, Mie 510-0848 (JP)**

(74) Representative: **Strehl Schübel-Hopf & Partner**
**Maximilianstrasse 54**
**80538 München (DE)**

(54) **CATALYST FOR OLEFIN POLYMERIZATION AND METHOD FOR PRODUCING OLEFIN POLYMER**

(57) Provided are a catalyst, which enables the production of a high molecular weight olefin polymer having a polar group and being usable for various applications at a high catalytic activity, and a method for producing such an olefin polymer. Use is made of, as a polymerization catalyst for an olefin having a polar group, a metal complex represented by general formula (C1) [wherein: M represents an element in group 10 of the periodic table; X represents a phosphorus atom (P) or arsenic atom (As); $R^5$ to $R^{11}$ are as described in claims; at least one of $R^6$ and $R^7$ is an aralkyl group represented by general formula (2) (wherein $R^{12}$ to $R^{21}$ are as described in claims); L represents an electron-donating ligand; and q is 0, 1/2, 1 or 2].

EP 4 400 520 A1

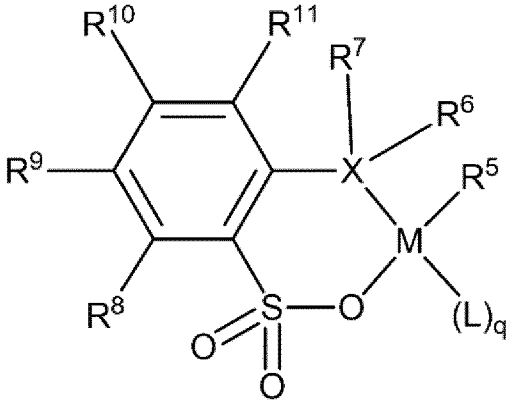

(C1)

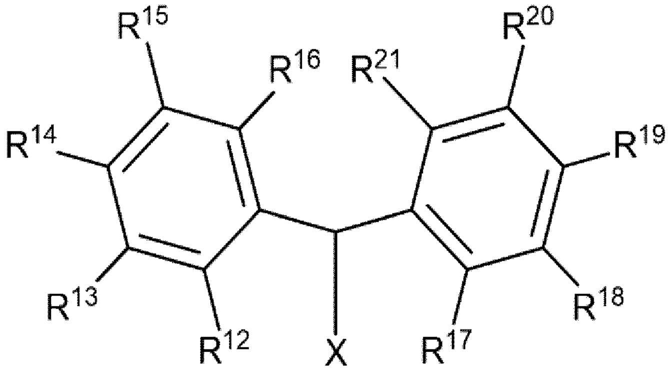

(2)

## Description

TECHNICAL FIELD

The present invention relates to a catalyst for olefin polymerization and a method for the production of an olefin-based polymer, and in particular, a polymer of a polar group-containing monomer such as an allyl compound having a polar group.

BACKGROUND ART

Copolymers of an olefin such as ethylene or propylene, which are non-polar monomers, and a vinyl monomer having a polar group have functions and properties that non-polar polyethylene and polypropylene do not have, and are used in a wide range of fields. In particular, ethylene/vinyl alcohol copolymers (EVOH) are copolymers consisting of ethylene monomer structural units and vinyl alcohol monomer structural units, and are produced by saponifying an ethylene/vinyl acetate copolymer obtained by radical copolymerization of ethylene and vinyl acetate. EVOHs are used in a wide range of fields, including food packaging, due to the excellent gas barrier properties thereof.

However, the polymerization of monomers having allyl groups is more difficult than that of ordinary vinyl monomers, and few polymers thereof are known. This is primarily because when a monomer having an allyl group is radically polymerized, due to a degenerative chain transfer reaction to the monomer caused by the extraction of hydrogen atoms present on the allyl carbon, the polymer growth reaction is extremely slow and only oligomers with a low degree of polymerization can be obtained (Chem. Rev. 58, 808 (1958); Non-Patent Literature 1).

JP 2011-68881 A (US 8916663; Patent Literature 1), JP 2014-159540 A (US 9499644; Patent Literature 2), JP 2015-137282 A (Patent Literature 3), WO 2019/093364 (Patent Literature 4), WO 2020/175482 (Patent Literature 5), and J. Am. Chem. Soc., 133, 1232 (2011) (Non-Patent Literature 2) demonstrate the coordination copolymerization of ethylene and a polar group-containing allyl monomer using a metal complex catalyst from Group 10 of the periodic table, by means of which the synthesis of copolymers of polar group-containing allyl monomers, which could not be obtained by radical polymerization, has been successful. It is desirable that the obtained copolymer have a weight average molecular weight (Mw) of tens of thousands or more and a high polar group content in the polymer from the viewpoint of film formability and transparency. However, in conventional production methods, the catalytic activity was insufficient under the conditions for producing a polymer with such a high weight average molecular weight and high polar group content, and problems remained in industrialization from the viewpoint of catalyst cost.

[CITATION LIST]

[PATENT LITERATURE]

[PTL 1] JP 2011-68881 A
[PTL 2] JP 2014-159540 A
[PTL 3] JP 2015-137282 A
[PTL 4] WO 2019/093364
[PTL 5] WO 2020/175482


[NON-PATENT LITERATURE]

[NPL 1] Chem. Rev. 58, 808 (1958)
[NPL 2] J. Am. Chem. Soc., 133, 1232 (2011)


SUMMARY

[TECHNICAL PROBLEM]

An object of the present invention is to provide a catalyst and method which allow for the production of a high molecular weight olefin-based polymer having a polar group for use in various applications with high catalytic activity.

[SOLUTION TO PROBLEM]

As a result of rigorous investigation in order to achieve the object described above, the present inventors have discovered that using a new metal complex from Group 10 of the periodic table as a catalyst in homopolymerization of a vinyl monomer (non-polar olefin) such as ethylene or propylene alone or copolymerization of the non-polar olefin with a polar group-containing olefin (including allyl monomers having polar groups) allows for the production of a high molecular weight olefin-based polymer having a polar group for use in various applications with high catalytic activity, and have completed the present invention.

Specifically, the present invention relates to the catalysts for olefine polymerization of [1] to [6] and the methods for the production of an ethylene (co)polymer of [7] to [13] below.

[1] A catalyst for olefin polymerization, comprising a metal complex represented by general formula (C1):

[Chem 1]

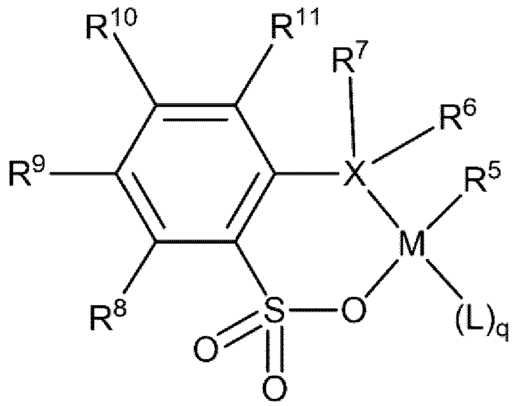

(C1)

where M represents an element of Group 10 of the periodic table; X represents a phosphorus atom (P) or an arsenic atom (As); $R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amide group having 2 to 10 carbon atoms, an alkoxy group having 1 to 30 carbon atoms, an aryloxy group having 6 to 30 carbon atoms, and an acyloxy group having 2 to 10 carbon atoms; $R^6$ and $R^7$ each independently represent an alkoxy group, an aryloxy group, a silyl group, an amino group, or a hydrocarbon group having 1 to 180 carbon atoms which may be substituted with one or more groups selected from a hydroxy group, a halogen atom, an alkoxy group, an aryloxy group, and an acyloxy group; at least one of $R^6$ and $R^7$ is an aralkyl group represented by general formula (2):

[Chem 2]

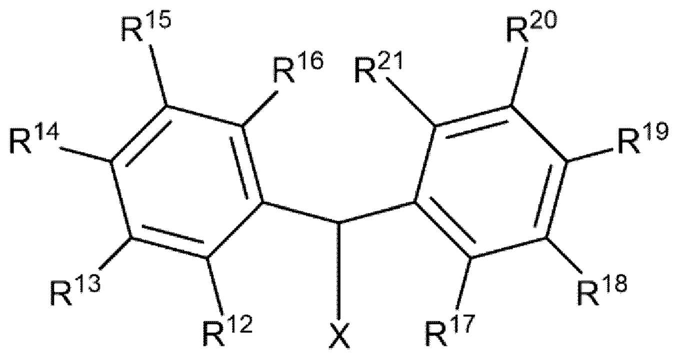

(2)

where $R^{12}$, $R^{13}$, $R^{14}$, $R^{15}$, $R^{16}$, $R^{17}$, $R^{18}$, $R^{19}$, $R^{20}$, and $R^{21}$ each independently represent a substituent selected from the group consisting of a hydrogen atom, a hydroxy group, a halogen atom, a hydrocarbon group having 1 to 10 carbon atoms, a hydrocarbon group having 1 to 10 carbon atoms substituted with a halogen atom, a hydrocarbon group having 2 to 20 carbon atoms substituted with an alkoxy group having 1 to 10 carbon atoms, a hydrocarbon group having 7 to 20 carbon atoms substituted with an aryloxy group having 6 to 10 carbon atoms, an alkoxy group having 1 to 10 carbon atoms, an aryloxy group having 6 to 10 carbon atoms, and an acyloxy group having 2 to 10 carbon atoms (it should be noted that the bond between the carbon atom and X in general formula (C1) is also shown in general formula (2)); $R^8$, $R^9$, $R^{10}$, and $R^{11}$ each independently represent a hydrogen atom, a halogen atom, a hydrocarbon group having 1 to 20 carbon atoms, an alkoxy group having 1 to 8 carbon atoms, an aryloxy group having 6 to 20 carbon atoms, a silyl group substituted with a hydrogen atom or a hydrocarbon group having 1 to 20 carbon atoms, or a hydrocarbon group having 1 to 20 carbon atoms substituted with a halogen atom; L represents an electron-donating ligand; and q is 0, 1/2, 1, or 2.

[2] The catalyst for olefin polymerization according to [1], wherein in general formula (C1), $R^6$ and $R^7$ are the same aralkyl group represented by general formula (2).

[3] The catalyst for olefin polymerization according to [1] or [2], wherein $R^{12}$, $R^{13}$, $R^{14}$, $R^{15}$, $R^{16}$, $R^{17}$, $R^{18}$, $R^{19}$, $R^{20}$, and $R^{21}$ in general formula (2) each independently represent a hydrogen atom, a hydrocarbon group having 1 to 10 carbon atoms, or an alkoxy group having 1 to 10 carbon atoms.

[4] The catalyst for olefin polymerization according to any one of [1] to [3], wherein $R^{13}$, $R^{14}$, $R^{15}$, $R^{18}$, $R^{19}$, and $R^{20}$ in general formula (2) are each independently a hydrogen atom, a hydrocarbon group having 1 to 10 carbon atoms, or an alkoxy group having 1 to 10 carbon atoms, and $R^{12}$, $R^{16}$, $R^{17}$, and $R^{21}$ are each independently a hydrogen atom.

[5] The catalyst for olefin polymerization according to any one of [1] to [4], wherein the aralkyl group represented by general formula (2) is a diphenylmethyl group, a bis(3,5-dimethylphenyl)methyl group, or a bis(3,5-dimethoxyphenyl)methyl group.

[6] The catalyst for olefin polymerization according to any one of [1] to [5], wherein $R^8$, $R^9$, $R^{10}$, and $R^{11}$ in general formula (C1) are all hydrogen atoms.

[7] A method for the production of: an ethylene homopolymer; a copolymer of ethylene and an olefin containing a polar group represented by general formula (1); or a copolymer of ethylene, an olefin containing a polar group represented by general formula (1), and another monomer, wherein a metal complex represented by general formula (C1) is used as a polymerization catalyst:

[Chem 3]

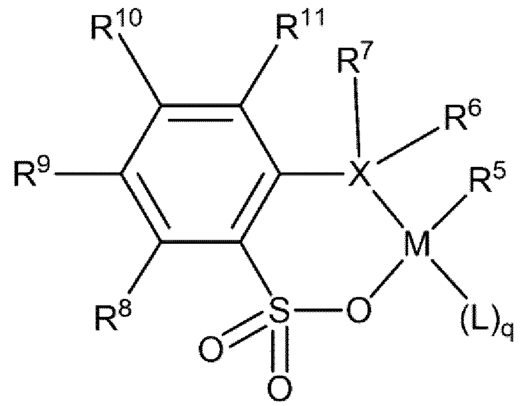

(C1)

where the symbols have the same meanings as in [1],

[Chem 4]

$$CH_2{=}CH{-}(CH_2)_n{-}R^1 \quad (1)$$

where $R^1$ is a substituent selected from the group consisting of a hydroxy group, an alkoxy group having 1 to 10 carbon atoms, an aryloxy group having 6 to 20 carbon atoms, an acyl group having 2 to 10 carbon atoms, an ester group having 2 to 10 carbon atoms (oxycarbonyl group; R-O-(C=O)-, where R is an organic group), an acyloxy group having 2 to 10 carbon atoms, an amino group, a substituted amino group having 1 to 12 carbon atoms, a substituted

amide group having 2 to 12 carbon atoms, a substituted pyridyl group having 5 to 10 carbon atoms, a substituted pyrrolidyl group having 4 to 10 carbon atoms, a substituted piperidyl group having 5 to 10 carbon atoms, a substituted hydrofuryl group having 4 to 10 carbon atoms, a substituted imidazolyl group having 4 to 10 carbon atoms, a mercapto group, an alkylthio group having 1 to 10 carbon atoms, an arylthio group having 6 to 10 carbon atoms, an epoxy group, and a halogen atom; and n is an integer selected from 0 to 6.

[8] The method according to [7], wherein n in general formula (1) is 0.

[9] The method according to [7], wherein n in general formula (1) is 1.

[10] The method according to any one of [7] to [9], wherein $R^{12}$, $R^{13}$, $R^{14}$, $R^{15}$, $R^{16}$, $R^{17}$, $R^{18}$, $R^{19}$, $R^{20}$, and $R^{21}$ in general formula (2) are each independently a hydrogen atom, a hydrocarbon group having 1 to 10 carbon atoms, or an alkoxy group having 1 to 10 carbon atoms.

[11] The method according to any one of [7] to [10], wherein $R^{13}$, $R^{14}$, $R^{15}$, $R^{18}$ $R^{19}$, and $R^{20}$ in general formula (2) are each independently a hydrogen atom, a hydrocarbon group having 1 to 10 carbon atoms, or an alkoxy group having 1 to 10 carbon atoms, and $R^{12}$, $R^{16}$, $R^{17}$, and $R^{21}$ are each independently a hydrogen atom.

[12] The method according to any one of [7] to [11], wherein the aralkyl group represented by general formula (2) is a diphenylmethyl group, a bis(3,5-dimethylphenyl)methyl group, or a bis(3,5-dimethoxyphenyl)methyl group.

[13] The method according to any one of [7] to [12], wherein $R^8$, $R^9$, $R^{10}$, and $R^{11}$ in general formula (C1) are all hydrogen atoms.

[ADVANTAGEOUS EFFECTS OF INVENTION]

According to the present invention, there is provided a catalyst and method which allow for the production of a high molecular weight olefin-based polymer having a polar group for use in various applications with high catalytic activity. For example, by copolymerizing a non-polar olefin (ethylene) with an olefin having a polar group, such as an allyl monomer having a polar group, using the catalyst for olefin polymerization of the present invention, a high molecular weight olefin-based polymer having polar groups which can be used in various applications can be produced at low cost.

BRIEF DESCRIPTION OF DRAWINGS

FIG. 1 is a graph in which the productivity (horizontal axis) and weight average molecular weight Mw (vertical axis) of Examples 4 and 5 as well as Comparative Examples 3 to 5 are plotted.

DESCRIPTION OF EMBODIMENTS

[Catalyst]

The catalyst used in the present invention, which is composed of a metal complex belonging to Group 10 of the periodic table, is represented by general formula (C1).

[Chem 5]

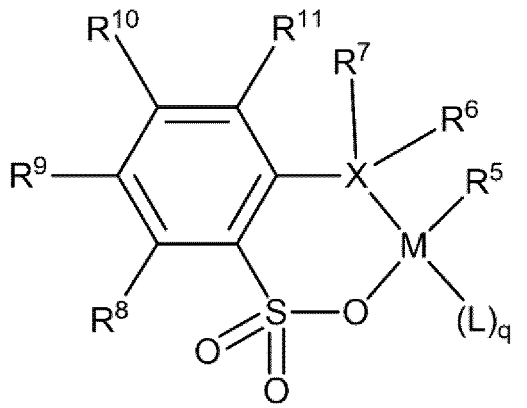

(C1)

In the formula, M represents an element of Group 10 of the periodic table; X represents a phosphorus atom (P) or an arsenic atom (As); $R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group

having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amide (amido) group having 2 to 10 carbon atoms, an alkoxy group having 1 to 30 carbon atoms, an aryloxy group having 6 to 30 carbon atoms, and an acyloxy group having 2 to 10 carbon atoms; $R^6$ and $R^7$ each independently represent an alkoxy group, an aryloxy group, a silyl group, an amino group, or a hydrocarbon group having 1 to 180 carbon atoms which may be substituted with one or more groups selected from a hydroxy group, a halogen atom, an alkoxy group, an aryloxy group, and an acyloxy group; at least one of $R^6$ and $R^7$ is an aralkyl group represented by general formula (2):

[Chem 6]

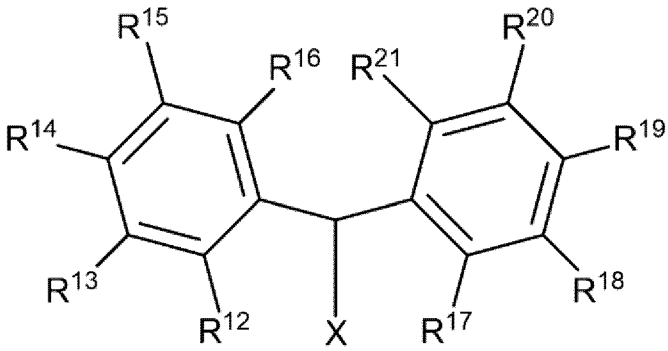

(2)

where $R^{12}$, $R^{13}$, $R^{14}$, $R^{15}$, $R^{16}$, $R^{17}$, $R^{18}$, $R^{19}$, $R^{20}$, and $R^{21}$ each independently represent a substituent selected from the group consisting of a hydrogen atom, a hydroxy group, a halogen atom, a hydrocarbon group having 1 to 10 carbon atoms, a hydrocarbon group having 1 to 10 carbon atoms substituted with a halogen atom, a hydrocarbon group having 2 to 20 carbon atoms substituted with an alkoxy group having 1 to 10 carbon atoms, a hydrocarbon group having 7 to 20 carbon atoms substituted with an aryloxy group having 6 to 10 carbon atoms, an alkoxy group having 1 to 10 carbon atoms, an aryloxy group having 6 to 10 carbon atoms, and an acyloxy group having 2 to 10 carbon atoms (it should be noted that the bond between the carbon atom and X in general formula (C1) is also shown in general formula (2)); $R^8$, $R^9$, $R^{10}$, and $R^{11}$ each independently represent a hydrogen atom, a halogen atom, a hydrocarbon group having 1 to 20 carbon atoms, an alkoxy group having 1 to 8 carbon atoms, an aryloxy group having 6 to 20 carbon atoms, a silyl group substituted with a hydrogen atom or a hydrocarbon group having 1 to 20 carbon atoms, or a hydrocarbon group having 1 to 20 carbon atoms substituted with a halogen atom; L represents an electron-donating ligand; and q is 0, 1/2, 1, or 2.

"Hydrocarbon" as used herein includes saturated and unsaturated aliphatic hydrocarbons as well as aromatic hydrocarbons.

The structure of general formula (C1) will be described below.

M represents an element of Group 10 of the periodic table. Examples of elements of Group 10 of the periodic table include Ni, Pd, and Pt, and Ni and Pd are preferable from the viewpoint of catalytic activity and the molecular weight of the polymer to be obtained, and Pd is more preferable.

X is a phosphorus atom (P) or an arsenic atom (As), and forms a two-electron coordination to the central metal M. As X, a phosphorus atom (P) is preferable from the viewpoint of availability and catalyst cost.

$R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amide group having 2 to 10 carbon atoms, an alkoxy group having 1 to 30 carbon atoms, an aryloxy group having 6 to 30 carbon atoms, and an acyloxy group having 2 to 10 carbon atoms.

Preferable specific examples of the halogen atom represented by $R^5$ include a fluorine atom, a chlorine atom, and a bromine atom. Among these, a chlorine atom is preferable.

The hydrocarbon group having 1 to 30 carbon atoms represented by $R^5$ is preferably a hydrocarbon group having 1 to 13 carbon atoms, and more preferably a hydrocarbon group having 1 to 5 carbon atoms. As the hydrocarbon group, an alkyl group, a cycloalkyl group, an aryl group, or an aralkyl group is preferable, and an alkyl group or an aralkyl group is more preferable. Specific preferable examples thereof include a methyl group, ethyl group, 1-propyl group, 1-butyl group, 1-pentyl group, 1-hexyl group, 1-heptyl group, 1-octyl group, 1-nonyl group, 1-decyl group, t-butyl group, tricyclohexylmethyl group, 1,1-dimethyl-2-phenylethyl group, isopropyl group, 1,1-dimethylpropyl group, 1,1,2-trimethylpropyl group, 1,1-diethylpropyl group, 1-phenyl-2-propyl group, isobutyl group, 1,1-dimethylbutyl group, 2-pentyl group, 3-pentyl group, 2-hexyl group, 3-hexyl group, 2-ethylhexyl group, 2-heptyl group, 3-heptyl group, 4-heptyl group, 2-propylheptyl group, 2-octyl group, 3-nonyl group, cyclopropyl group, cyclobutyl group, cyclopentyl group, methylcyclopentyl group, cyclohexyl group, methylcyclohexyl group, cycloheptyl group, cyclooctyl group, cyclododecyl group, 1-adamantyl group, 2-adamantyl group, exo-norbornyl group, endo-norbornyl group, 2-bicyclo[2.2.2]octyl group, nopinyl group, decahydronaphthyl group, menthyl group, neomenthyl group, neopentyl group, 5-decyl group, phenyl group, naphthyl group, anthracenyl group, fluorenyl group, tolyl group, xylyl group, benzyl group, and p-ethylphenyl group. Among these, a methyl group or benzyl group is more preferable, and a methyl group is particularly preferable.

The hydrocarbon group having 1 to 30 carbon atoms substituted with a halogen atom represented by $R^5$ is preferably a group in which the hydrocarbon group having 1 to 30 carbon atoms described above is substituted with fluorine, chlorine, or bromine, and preferable specific examples thereof include a trifluoromethyl group and a pentafluorophenyl group.

The hydrocarbon group having 2 to 30 carbon atoms substituted with an alkoxy group having 1 to 10 carbon atoms represented by $R^5$ is preferably a group in which the hydrocarbon group having 1 to 30 carbon atoms described above is substituted with a methoxy group, ethoxy group, isopropoxy group, 1-propoxy group, 1-butoxy group, or t-butoxy group. A hydrocarbon group having 2 to 6 carbon atoms substituted with a methoxy group or an ethoxy group is further preferable. Specific examples thereof include a 1-(methoxymethyl)ethyl group, 1-(ethoxymethyl)ethyl group, 1-(phenoxymethyl)ethyl group, 1-(methoxyethyl)ethyl group, 1-(ethoxyethyl)ethyl group, di(methoxymethyl)methyl group, di(ethoxymethyl)methyl group, and di(phenoxymethyl)methyl group. A 1-(methoxymethyl)ethyl group or a 1-(ethoxymethyl)ethyl group is particularly preferable.

The hydrocarbon group having 7 to 30 carbon atoms substituted with an aryloxy group having 6 to 20 carbon atoms represented by $R^5$ is preferably a group in which the hydrocarbon group having 1 to 30 carbon atoms described above is substituted with a phenoxy group, 4-methylphenoxy group, 4-methoxyphenoxy group, 2,6-dimethylphenoxy group, or 2,6-di-t-butylphenoxy group. A hydrocarbon group having 1 to 6 carbon atoms substituted with a phenoxy group or a 2,6-dimethylphenoxy group is further preferable, and a 1-(phenoxymethyl)ethyl group or 1-(2,6-dimethylphenoxymethyl)ethyl group is particularly preferable.

The hydrocarbon group having 3 to 30 carbon atoms substituted with an amide (amido) group (R-(C=O)NH-, where R is an organic group) having 2 to 10 carbon atoms represented by $R^5$ is preferably a substituent in which the hydrocarbon group having 1 to 30 carbon atoms described above is substituted with an acetamide group, propionylamino group, butyrylamino group, isobutyrylamino group, valerylamino group, isovalerylamino group, pivaloylamino group, or benzoylamino group. A 2-acetamidophenyl group, 2-propionylaminophenyl group, 2-valerylaminophenyl group, or 2-benzoylaminophenyl group is further preferable, and a 2-acetamidophenyl group is particularly preferable.

The alkoxy group having 1 to 30 carbon atoms represented by $R^5$ is preferably an alkoxy group having 1 to 6 carbon atoms. Preferable specific examples thereof include a methoxy group, ethoxy group, isopropoxy group, 1-propoxy group, 1-butoxy group, and t-butoxy group. Among these, a methoxy group, ethoxy group, or isopropoxy group is more preferable, and a methoxy group is particularly preferable.

The aryloxy group having 6 to 30 carbon atoms represented by $R^5$ is preferably an aryloxy group having 6 to 12 carbon atoms. Preferable specific examples thereof include a phenoxy group, 4-methylphenoxy group, 4-methoxyphenoxy group, 2,6-dimethylphenoxy group, and 2,6-di-t-butylphenoxy group. Among these, a phenoxy group or 2,6-dimethylphenoxy group is more preferable, and a phenoxy group is particularly preferable.

The acyloxy group having 2 to 10 carbon atoms represented by $R^5$ is preferably an acyloxy group having 2 to 8 carbon atoms. Preferable specific examples thereof include an acetyloxy group, propionyloxy group, butyryloxy group, isobutyryloxy group, valeryloxy group, isovaleryloxy group, pivaloyloxy group, and benzoyloxy group. Among these, an acetyloxy group, propionyloxy group, or benzoyloxy group is more preferable, and an acetyloxy group or propionyloxy group is particularly preferable.

Among these preferable groups as $R^5$, a hydrocarbon group having 1 to 30 carbon atoms, an alkoxy group having 1 to 30 carbon atoms, a hydrocarbon group having 3 to 30 carbon atoms substituted with an amide group having 2 to 10 carbon atoms, or an acyloxy group having 2 to 10 carbon atoms is further preferable, and a hydrocarbon group having 1 to 30 carbon atoms is most preferable. The hydrocarbon group having 1 to 30 carbon atoms is preferably an alkyl group having 1 to 5 carbon atoms. Particularly preferable examples thereof include a methyl group, benzyl group, methoxy group, 2-acetamidophenyl group, and acetyloxy group.

$R^6$ and $R^7$ each independently represent an alkoxy group, an aryloxy group, a silyl group, an amino group, or a hydrocarbon group having 1 to 180 carbon atoms which may be substituted with one or more groups selected from a halogen atom, an alkoxy group, and an aryloxy group, and at least one of $R^6$ and $R^7$ is an aralkyl group represented by general formula (2):

[Chem 7]

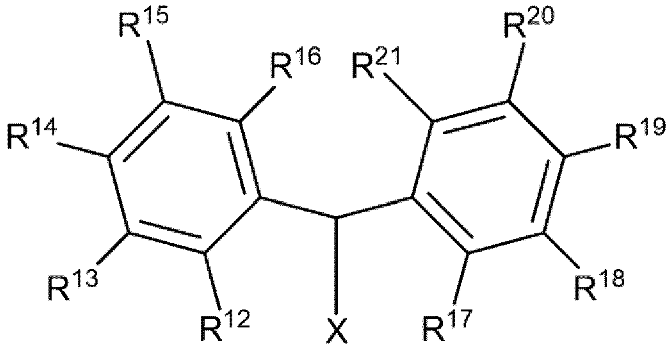

(2)

In the formula, $R^{12}$, $R^{13}$, $R^{14}$, $R^{15}$, $R^{16}$, $R^{17}$, $R^{18}$, $R^{19}$, $R^{20}$, and $R^{21}$ each independently represent a substituent selected from the group consisting of a hydrogen atom, a hydroxy group, a halogen atom, a hydrocarbon group having 1 to 10 carbon atoms, a hydrocarbon group having 1 to 10 carbon atoms substituted with a halogen atom, a hydrocarbon group having 2 to 20 carbon atoms substituted with an alkoxy group having 1 to 10 carbon atoms, a hydrocarbon group having 7 to 20 carbon atoms substituted with an aryloxy group having 6 to 10 carbon atoms, an alkoxy group having 1 to 10 carbon atoms, an aryloxy group having 6 to 10 carbon atoms, and an acyloxy group having 2 to 10 carbon atoms. It should be noted that the bond between the carbon atom and X in general formula (C1) is also shown in general formula (2).

The alkoxy group represented by $R^6$ and $R^7$ preferably has 1 to 20 carbon atoms, and examples thereof include a methoxy group, ethoxy group, propoxy group, and isopropoxy group.

The aryloxy group represented by $R^6$ and $R^7$ preferably has 6 to 24 carbon atoms, and examples thereof include a phenoxy group.

Examples of the silyl group represented by $R^6$ and $R^7$ include a trimethylsilyl group. Examples of the amino group include an amino group, a methylamino group, and a dimethylamino group.

The halogen atom in the hydrocarbon group having 1 to 180 carbon atoms which may be substituted with one or more groups selected from a hydroxy group, a halogen atom, an alkoxy group, an aryloxy group, and an acyloxy group represented by $R^6$ and $R^7$ is a fluorine atom, a chlorine atom, or a bromine atom, and a fluorine atom is preferable. The alkoxy group preferably has 1 to 20 carbon atoms, and examples thereof include a methoxy group, an ethoxy group, a propoxy group, and an isopropoxy group. The aryloxy group preferably has 6 to 24 carbon atoms, and examples thereof include a phenoxy group. Examples of the acyloxy group include an acetyloxy group, a propionyloxy group, and a benzoyloxy group. The number of carbon atoms in the hydrocarbon group having 1 to 180 carbon atoms includes the number of carbon atoms in the substituents described above. Though the hydrocarbon group is not particularly limited, at least one is a group represented by general formula (2) described below.

Specific examples of the hydrocarbon group having 1 to 180 carbon atoms which may be substituted with one or more groups selected from a hydroxy group, a halogen atom, an alkoxy group, an aryloxy group, and an acyloxy group, other than the group represented by general formula (2), include a methyl group, ethyl group, n-propyl group, isopropyl group, n-butyl group, isobutyl group, sec-butyl group, t-butyl group, n-pentyl group, 2-pentyl group, 3-pentyl group, neopentyl group, n-hexyl group, 2-hexyl group, 3-hexyl group, 2-heptyl group, 3-heptyl group, 4-heptyl group, 2-methyl-4-heptyl group, 2,6-dimethyl-4-heptyl group, 3-methyl-4-heptyl group, cyclopropyl group, cyclobutyl group, cyclopentyl group, cyclohexyl group, cycloheptyl group, cyclooctyl group, 1-adamantyl group, trifluoromethyl group, benzyl group, 2'-methoxybenzyl group, 3'-methoxybenzyl group, 4'-methoxybenzyl group, 4'-trifluoromethylbenzyl group, phenyl group, 2-methylphenyl group, 3-methylphenyl group, 4-methylphenyl group, 2,6-dimethylphenyl group, 3,5-dimethylphenyl group, 2,4,6-trimethylphenyl group, 2-isopropylphenyl group, 3-isopropylphenyl group, 4-isopropylphenyl group, 2,6-diisopropylphenyl group, 3,5-diisopropylphenyl group, 2,4,6-triisopropylphenyl group, 2-t-butylphenyl group, 2-cyclohexylphenyl group, 2-methoxyphenyl group, 3-methoxyphenyl group, 4-methoxyphenyl group, 2,6-dimethoxyphenyl group, 3,5-dimethoxyphenyl group, 2,4,6-trimethoxyphenyl group, 4-fluorophenyl group, pentafluorophenyl group, 4-trifluoromethylphenyl group, 3,5-bis(trifluoromethyl)phenyl group, 1-naphthyl group, 2-naphthyl group, 2-furyl group, 2-biphenyl group, 2',6'-dimethoxy-2-biphenyl group, 2'-methyl-2-biphenyl group, and 2',4',6'-triisopropyl-2-biphenyl group.

$R^6$ and $R^7$ may be the same or may be different.

At least one of $R^6$ and $R^7$ is an aralkyl group represented by general formula (2):

[Chem 8]

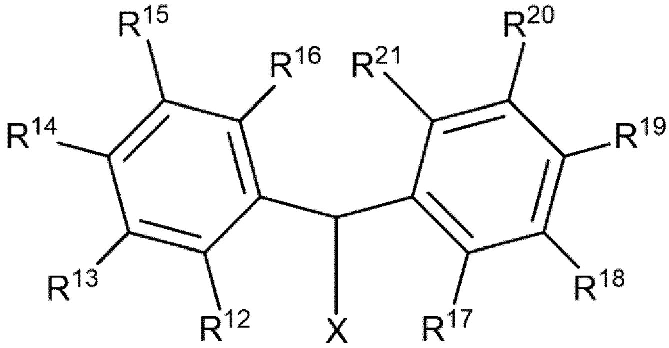

(2)

In the formula, $R^{12}$, $R^{13}$, $R^{14}$, $R^{15}$, $R^{16}$, $R^{17}$, $R^{18}$, $R^{19}$, $R^{20}$, and $R^{21}$ each independently represent a substituent selected from the group consisting of a hydrogen atom, a hydroxy group, a halogen atom, a hydrocarbon group having 1 to 10 carbon atoms, a hydrocarbon group having 1 to 10 carbon atoms substituted with a halogen atom, a hydrocarbon group having 2 to 20 carbon atoms substituted with an alkoxy group having 1 to 10 carbon atoms, a hydrocarbon group having 7 to 20 carbon atoms substituted with an aryloxy group having 6 to 10 carbon atoms, an alkoxy group having 1 to 10 carbon atoms, an aryloxy group having 6 to 10 carbon atoms, and an acyloxy group having 2 to 10 carbon atoms. It should be noted that the bond between the carbon atom and X in general formula (C1) is also shown in general formula (2).

Specific examples of the halogen atoms represented by $R^{12}$, $R^{13}$, $R^{14}$, $R^{15}$, $R^{16}$, $R^{17}$, $R^{18}$, $R^{19}$, $R^{20}$, and $R^{21}$ include an iodine atom, fluorine atom, bromine atom, and chlorine atom. Among these, a fluorine atom or a chlorine atom is particularly preferable.

The hydrocarbon group having 1 to 10 carbon atoms represented by $R^{12}$, $R^{13}$, $R^{14}$, $R^{15}$, $R^{16}$, $R^{17}$, $R^{18}$, $R^{19}$, $R^{20}$, and $R^{21}$ is preferably an alkyl group or an aryl group. Preferable examples of the hydrocarbon group having 1 to 10 carbon atoms include a methyl group, ethyl group, n-propyl group, isopropyl group, n-butyl group, isobutyl group, sec-butyl group, t-butyl group, phenyl group, 1-naphthyl group, 2-naphthyl group, and benzyl group, and a methyl group, isopropyl group, t-butyl group, or phenyl group is particularly preferable.

Preferable examples of the hydrocarbon group having 1 to 10 carbon atoms substituted with a halogen atom represented by $R^{12}$, $R^{13}$, $R^{14}$, $R^{15}$, $R^{16}$, $R^{17}$, $R^{18}$, $R^{19}$, $R^{20}$, and $R^{21}$ include the hydrocarbon group having 1 to 10 carbon atoms substituted with one or more halogen atoms described above, and a trifluoromethyl group, trichloromethyl group, pentafluoroethyl group, or pentafluorophenyl group is particularly preferable.

Preferable examples of the alkoxy group having 1 to 10 carbon atoms in the hydrocarbon group having 2 to 20 carbon atoms (including the number of carbon atoms of the alkoxy group) substituted with an alkoxy group having 1 to 10 carbon atoms represented by $R^{12}$, $R^{13}$, $R^{14}$, $R^{15}$, $R^{16}$, $R^{17}$, $R^{18}$ $R^{19}$, $R^{20}$, and $R^{21}$ include a methoxy group, ethoxy group, 1-propoxy group, isopropoxy group, 1-butoxy group, isobutoxy group, sec-butoxy group, t-butoxy group, and pentyloxy group. Preferable examples of the hydrocarbon group having 2 to 20 carbon atoms substituted with an alkoxy group having 1 to 10 carbon atoms include the hydrocarbon group having 1 to 10 carbon atoms substituted with these alkoxy groups, and a methoxymethyl group, 2-methoxyethyl group, isopropoxymethyl group, 2-isopropoxyethyl group, 2-methoxyphenyl group, 3-methoxyphenyl group, or 4-methoxyphenyl group is particularly preferable.

Preferable examples of the aryloxy group having 6 to 10 carbon atoms in the hydrocarbon group having 7 to 20 carbon atoms (including the number of carbon atoms in the aryloxy group) substituted with an aryloxy group having 6 to 10 carbon atoms represented by $R^{12}$, $R^{13}$, $R^{14}$, $R^{15}$, $R^{16}$, $R^{17}$, $R^{18}$, $R^{19}$, $R^{20}$, and $R^{21}$ include a phenoxy group, 1-naphthoxy group, and 2-naphthoxy group. Preferable examples of the hydrocarbon group having 7 to 20 carbon atoms substituted with an aryloxy group having 6 to 10 carbon atoms include the hydrocarbon group having 1 to 10 carbon atoms substituted with these aryloxy groups described above, and a phenoxymethyl group, 2-phenoxyethyl group, 2-phenoxyphenyl group, 3-phenoxyphenyl group, or 4-phenoxyphenyl group is particularly preferable.

Preferable examples of the alkoxy group having 1 to 10 carbon atoms represented by $R^{12}$, $R^{13}$, $R^{14}$, $R^{15}$, $R^{16}$, $R^{17}$, $R^{18}$, $R^{19}$, $R^{20}$, and $R^{21}$ include a methoxy group, ethoxy group, 1-propoxy group, isopropoxy group, 1-butoxy group, isobutoxy group, sec-butoxy group, t-butoxy group, and pentyloxy group, and a methoxy group or isopropoxy group is particularly preferable.

Preferable examples of the aryloxy group having 6 to 10 carbon atoms represented by $R^{12}$, $R^{13}$, $R^{14}$, $R^{15}$ $R^{16}$, $R^{17}$, $R^{18}$, $R^{19}$, $R^{20}$, and $R^{21}$ include a phenoxy group, 1-naphthoxy group, and 2-naphthoxy group, and a phenoxy group is particularly preferable.

Preferable examples of the acyloxy group having 2 to 10 carbon atoms represented by $R^{12}$, $R^{13}$, $R^{14}$, $R^{15}$, $R^{16}$, $R^{17}$, $R^{18}$, $R^{19}$, $R^{20}$, and $R^{21}$ include an acetyloxy group, propionyloxy group, butyryloxy group, isobutyryloxy group,

valeryloxy group, isovaleryloxy group, pivaloyloxy group, and benzoyloxy group, and an acetyloxy group, propionyloxy group, or benzoyloxy group is particularly preferable.

$R^{12}$, $R^{13}$, $R^{14}$, $R^{15}$, $R^{16}$, $R^{17}$, $R^{18}$, $R^{19}$, $R^{20}$, and $R^{21}$ each preferably independently represent a hydrogen atom, a hydrocarbon group having 1 to 10 carbon atoms, or an alkoxy group having 1 to 10 carbon atoms. $R^{13}$, $R^{14}$, $R^{15}$, $R^{18}$, $R^{19}$, and $R^{20}$ are preferably each independently a hydrogen atom, a hydrocarbon group having 1 to 10 carbon atoms, or an alkoxy group having 1 to 10 carbon atoms, and it is further preferable that $R^{12}$, $R^{16}$, $R^{17}$, and $R^{21}$ be hydrogen atoms. The hydrocarbon group having 1 to 10 carbon atoms or alkoxy group having 1 to 10 carbon atoms is further preferably an alkyl group having 1 to 5 carbon atoms or an alkoxy group having 1 to 5 carbon atoms, and a methyl group, t-butyl group, or methoxy group is most preferable.

In an embodiment, the aralkyl group represented by general formula (2) does not have bonds between $R^{12}$ and $R^{17}$, $R^{12}$ and $R^{21}$, $R^{16}$ and $R^{17}$, and $R^{16}$ and $R^{21}$.

Specific examples of $R^6$ or $R^7$ when $R^6$ or $R^7$ is an aralkyl group represented by general formula (2) include a diphenylmethyl group, 2-methyldiphenylmethyl group, 3-methyldiphenylmethyl group, 4-methyldiphenylmethyl group, 2-ethyldiphenylmethyl group, 3-ethyldiphenylmethyl group, 4-ethyldiphenylmethyl group, 2-n-propyldiphenylmethyl group, 3-n-propyldiphenylmethyl group, 4-n-propyldiphenylmethyl group, 2-isopropyldiphenylmethyl group, 3-isopropyldiphenylmethyl group, 4-isopropyldiphenylmethyl group, 2-n-butyldiphenylmethyl group, 3-n-butyldiphenylmethyl group, 4-n-butyldiphenylmethyl group, 2-isobutyldiphenylmethyl group, 3-isobutyldiphenylmethyl group, 4-isobutyldiphenylmethyl group, 2-sec-butyldiphenylmethyl group, 3-sec-butyldiphenylmethyl group, 4-sec-butyldiphenylmethyl group, 2-t-butyldiphenylmethyl group, 3-t-butyldiphenylmethyl group, 4-t-butyldiphenylmethyl group, 2-methoxydiphenylmethyl group, 3-methoxydiphenylmethyl group, 4-methoxydiphenylmethyl group, 2-ethoxydiphenylmethyl group, 3-ethoxydiphenylmethyl group, 4-ethoxydiphenylmethyl group, 2-hydroxydiphenylmethyl group, 3-hydroxydiphenylmethyl group, 4-hydroxydiphenylmethyl group, 2-trifluoromethyldiphenylmethyl group, 3-trifluoromethyldiphenylmethyl group, 4-trifluoromethyldiphenylmethyl group, 2-fluorodiphenylmethyl group, 3-fluorodiphenylmethyl group, 4-fluorodiphenylmethyl group, 2-chlorodiphenylmethyl group, 3-chlorodiphenylmethyl group, 4-chlorodiphenylmethyl group, 2,3-dimethyldiphenylmethyl group, 2,4-dimethyldiphenylmethyl group, 2,5-dimethyldiphenylmethyl group, 2,3'-dimethyldiphenylmethyl group, 2,4'-dimethyldiphenylmethyl group, bis(2-methylphenyl)methyl group, 3,4-dimethyldiphenylmethyl group, 3,5-dimethyldiphenylmethyl group, bis(3-methylphenyl)methyl group, 3,4'-dimethyldiphenylmethyl group, bis(4-methylphenyl)methyl group, 2,3-diethyldiphenylmethyl group, 2,4-diethyldiphenylmethyl group, 2,5-diethyldiphenylmethyl group, 2,3'-diethyldiphenylmethyl group, 2,4'-diethyldiphenylmethyl group, bis(2-ethylphenyl)methyl group, 3,4-diethyldiphenylmethyl group, 3,5-diethyldiphenylmethyl group, bis(3-ethylphenyl)methyl group, 3,4'-diethyldiphenylmethyl group, bis(4-ethylphenyl)methyl group, 2,3-di-n-propyldiphenylmethyl group, 2,4-di-n-propyldiphenylmethyl group, 2,5-di-n-propyldiphenylmethyl group, 2,3'-di-n-propyldiphenylmethyl group, 2,4'-di-n-propyldiphenylmethyl group, bis(2-n-propylphenyl)methyl group, 3,4-di-n-propyldiphenylmethyl group, 3,5-di-n-propyldiphenylmethyl group, bis(3-n-propylphenyl)methyl group, 3,4'-di-n-propyldiphenylmethyl group, bis(4-n-propylphenyl)methyl group, 2,3-diisopropyldiphenylmethyl group, 2,4-diisopropyldiphenylmethyl group, 2,5-diisopropyldiphenylmethyl group, 2,3'-diisopropyldiphenylmethyl group, 2,4'-diisopropyldiphenylmethyl group, bis(2-isopropylphenyl)methyl group, 3,4-diisopropyldiphenylmethyl group, 3,5-diisopropyldiphenylmethyl group, bis(3-isopropylphenyl)methyl group, 3,4'-diisopropyldiphenylmethyl group, bis(4-isopropylphenyl)methyl group, 2,3-di-t-butyldiphenylmethyl group, 2,4-di-t-butyldiphenylmethyl group, 2,5-di-t-butyldiphenylmethyl group, 2,3'-di-t-butyldiphenylmethyl group, 2,4'-di-t-butyldiphenylmethyl group, bis(2-t-butylphenyl)methyl group, 3,4-di-t-butyldiphenylmethyl group, 3,5-di-t-butyldiphenylmethyl group, bis(3-t-butylphenyl)methyl group, 3,4'-di-t-butyldiphenylmethyl group, bis(4-t-butylphenyl)methyl group, 2,3-dimethoxydiphenylmethyl group, 2,4-dimethoxydiphenylmethyl group, 2,5-dimethoxydiphenylmethyl group, 2,3'-dimethoxydiphenylmethyl group, 2,4'-dimethoxydiphenylmethyl group, bis(2-methoxyphenyl)methyl group, 3,4-dimethoxydiphenylmethyl group, 3,5-dimethoxydiphenylmethyl group, bis(3-methoxyphenyl)methyl group, 3,4'-dimethoxydiphenylmethyl group, bis(4-methoxyphenyl)methyl group, 3-methoxy-2-methyldiphenylmethyl group, 4-methoxy-2-methyldiphenylmethyl group, 5-methoxy-2-methyldiphenylmethyl group, 3-methoxy-2'-methyldiphenylmethyl group, 4-methoxy-2'-methyldiphenylmethyl group, 2-methoxy-2'-methyldiphenylmethyl group, 4-methoxy-3-methyldiphenylmethyl group, 5-methoxy-3-methyldiphenylmethyl group, 3-methoxy-3'-methyldiphenylmethyl group, 4-methoxy-3'-methyldiphenylmethyl group, 4-methoxy-4'-methyldiphenylmethyl group, 2-methoxy-3-methyldiphenylmethyl group, 2-methoxy-4-methyldiphenylmethyl group, 2-methoxy-5-methyldiphenylmethyl group, 2-methoxy-3'-methyldiphenylmethyl group, 2-methoxy-4'-methyldiphenylmethyl group, 3-methoxy-4-methyldiphenylmethyl group, 3-methoxy-4'-methyldiphenylmethyl group, bis(2-fluorophenyl)methyl group, bis(2-chlorophenyl)methyl group, bis(3-fluorophenyl)methyl group, bis(3-chlorophenyl)methyl group, bis(4-fluorophenyl)methyl group, bis(4-chlorophenyl)methyl group, bis(2,6-dimethylphenyl)methyl group, bis(3,5-dimethylphenyl)methyl group, bis(2,6-diethylphenyl)methyl group, bis(3,5-diethylphenyl)methyl group, bis(2,6-di-n-propylphenyl)methyl group, bis(3,5-di-n-propylphenyl)methyl group, bis(2,6-diisobutylphenyl)methyl group, bis(3,5-diisobutylphenyl)methyl group, bis(2,6-di-t-butylphenyl)methyl group, bis(3,5-di-t-butylphenyl)methyl group, bis(2,6-dimethoxyphenyl)methyl group, bis(3,5-dimethoxyphenyl)methyl group, bis(2-methoxy-4-methylphenyl)methyl group, bis(2-methoxy-5-methylphenyl)methyl group, bis(2,6-difluorophenyl)methyl group, bis(3,5-difluorophenyl)methyl group, bis(2,6-dichlorophenyl)methyl group, and

bis(3,5-dichlorophenyl)methyl group. Among these, a diphenylmethyl group, bis(3,5-dimethylphenyl)methyl group, bis(3,5-diethylphenyl)methyl group, bis(3,5-diisopropylphenyl)methyl group, or bis(3,5-di-t-butylphenyl)methyl group is preferable, and a diphenylmethyl group, bis(3,5-dimethylphenyl)methyl group, or bis(3,5-dimethoxyphenyl)methyl group is particularly preferable.

From the viewpoint of ease of synthesis and catalytic activity, $R^6$ and $R^7$ are preferably each independently an aralkyl group represented by general formula (2), and most preferably the same aralkyl group represented by general formula (2).

$R^8$, $R^9$, $R^{10}$, and $R^{11}$ each independently represent a hydrogen atom, a halogen atom, a hydrocarbon group having 1 to 20 carbon atoms, an alkoxy group having 1 to 8 carbon atoms, an aryloxy group having 6 to 20 carbon atoms, a silyl group substituted with a hydrogen atom or a hydrocarbon group having 1 to 20 carbon atoms, or a hydrocarbon group having 1 to 20 carbon atoms substituted with a halogen atom.

Preferable specific examples of the halogen atom represented by $R^8$, $R^9$, $R^{10}$, and $R^{11}$ include a fluorine atom, a chlorine atom, and a bromine atom. Among these, a fluorine atom is preferable.

The hydrocarbon group having 1 to 20 carbon atoms represented by $R^8$, $R^9$, $R^{10}$, and $R^{11}$ is preferably a hydrocarbon group having 1 to 13 carbon atoms. As the hydrocarbon group, an alkyl group, cycloalkyl group, aryl group, or aralkyl group is preferable. Preferable specific examples thereof include a methyl group, ethyl group, 1-propyl group, 1-butyl group, 1-pentyl group, 1-hexyl group, 1-heptyl group, 1-octyl group, 1-nonyl group, 1-decyl group, t-butyl group, tricyclohexylmethyl group, 1,1-dimethyl-2-phenylethyl group, isopropyl group, 1,1-dimethylpropyl group, 1,1,2-trimethylpropyl group, 1,1-diethylpropyl group, 1-phenyl-2-propyl group, isobutyl group, 1,1-dimethylbutyl group, 2-pentyl group, 3-pentyl group, 2-hexyl group, 3-hexyl group, 2-ethylhexyl group, 2-heptyl group, 3-heptyl group, 4-heptyl group, 2-propylheptyl group, 2-octyl group, 3-nonyl group, cyclopropyl group, cyclobutyl group, cyclopentyl group, methylcyclopentyl group, cyclohexyl group, methylcyclohexyl group, cycloheptyl group, cyclooctyl group, cyclododecyl group, 1-adamantyl group, 2-adamantyl group, exo-norbornyl group, endo-norbornyl group, 2-bicyclo[2.2.2]octyl group, nopinyl group, decahydronaphthyl group, menthyl group, neomenthyl group, neopentyl group, 5-decyl group, phenyl group, naphthyl group, anthracenyl group, fluorenyl group, tolyl group, xylyl group, benzyl group, and p-ethylphenyl group. Among these, a methyl group or benzyl group is more preferable, and a methyl group is particularly preferable.

Specific examples of the alkoxy group having 1 to 8 carbon atoms represented by $R^8$, $R^9$, $R^{10}$, and $R^{11}$ include a methoxy group, ethoxy group, 1-propoxy group, isopropoxy group, 1-butoxy group, isobutoxy group, sec-butoxy group, t-butoxy group, and pentyloxy group. Among these, a methoxy group, ethoxy group, 1-propoxy group, or isopropoxy group is more preferable, and a methoxy group or ethoxy group is particularly preferable.

Specific examples of the aryloxy group having 6 to 20 carbon atoms represented by $R^8$, $R^9$, $R^{10}$, and $R^{11}$ include a phenoxy group, 2-methylphenoxy group, 3-methylphenoxy group, 4-methylphenoxy group, 2-methoxyphenoxy group, 3-methoxyphenoxy group, 4-methoxyphenoxy group, 2,6-dimethylphenoxy group, 2,6-diisopropylphenoxy group, 2,6-di-t-butylphenoxy group, and 2,4,6-trimethylphenoxy group. Among these, a phenoxy group, 4-methylphenoxy group, 4-methoxyphenoxy group, or 2,6-diisopropylphenoxy group is further preferable, and a phenoxy group or 4-methoxyphenoxy group is particularly preferable.

Preferable examples of the hydrocarbon group having 1 to 20 carbon atoms in the silyl group substituted with a hydrogen atom or a hydrocarbon group having 1 to 20 carbon atoms represented by $R^8$, $R^9$, $R^{10}$, and $R^{11}$ are the same as the preferable examples of the hydrocarbon group having 1 to 20 carbon atoms represented by $R^8$, $R^9$, $R^{10}$, and $R^{11}$ described above. More preferable examples of the silyl group substituted with a hydrogen atom or a hydrocarbon group having 1 to 20 carbon atoms represented by $R^8$, $R^9$, $R^{10}$, and $R^{11}$ include a trimethylsilyl group, triethylsilyl group, tri(n-propyl)silyl group, triisopropylsilyl group, t-butyldimethylsilyl group, and triphenylsilyl group. Among these, a trimethylsilyl group, triethylsilyl group, or triisopropylsilyl group is particularly preferable.

The hydrocarbon group having 1 to 20 carbon atoms substituted with a halogen atom represented by $R^8$, $R^9$, $R^{10}$, and $R^{11}$ is preferably a group in which the hydrocarbon group having 1 to 20 carbon atoms described above is substituted with a fluorine atom, chlorine atom, or bromine atom, and specific preferable examples thereof include a trifluoromethyl group and a pentafluorophenyl group.

In some embodiments, $R^8$, $R^9$, $R^{10}$, and $R^{11}$ are all hydrogen atoms.

Electron-donating ligands (L) are compounds which have an electron-donating group and can coordinate to a metal atom M to stabilize a metal complex.

Examples of the electron-donating ligands (L) having a sulfur atom include dimethyl sulfoxide (DMSO). Examples of the electron-donating ligands (L) having a nitrogen atom include trialkylamines having an alkyl group having 1 to 10 carbon atoms, dialkylamines having an alkyl group having 1 to 10 carbon atoms, pyridine, 2,6-dimethylpyridine (also known as 2,6-lutidine), aniline, 2,6-dimethylaniline, 2,6-diisopropylaniline, N,N,N',N'-tetramethylethylenediamine (TMEDA), 4-(N,N-dimethylamino)pyridine (DMAP), acetonitrile, benzonitrile, quinoline, and 2-methylquinoline. Examples of the electron-donating ligands (L) having an oxygen atom include diethyl ether, tetrahydrofuran, and 1,2-dimethoxyethane. From the viewpoint of metal complex stability and catalytic activity, dimethyl sulfoxide (DMSO), pyridine, 2,6-dimethylpyridine (also known as 2,6-lutidine), or N,N,N',N'-tetramethylethylenediamine (TMEDA) is preferable, and dimethyl

sulfoxide (DMSO) or 2,6-dimethylpyridine (also known as 2,6-lutidine) is more preferable.

q is 0, 1/2, 1 or 2. When q is 1/2, it means that one divalent electron-donating ligand is coordinated to two metal complexes. q is preferably 1/2 or 1 in order to stabilize the metal complex catalyst. It should be noted that this means there are no ligands when q is 0.

The metal complex represented by general formula (C1) is preferably a compound represented by formula (C2), formula (C3), or formula (C4).

[Chem 9]

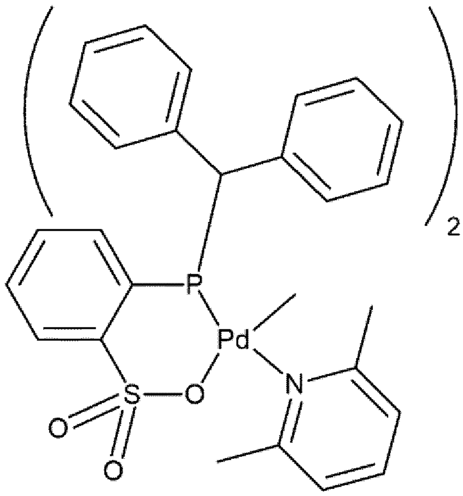

(C2)

[Chem 10]

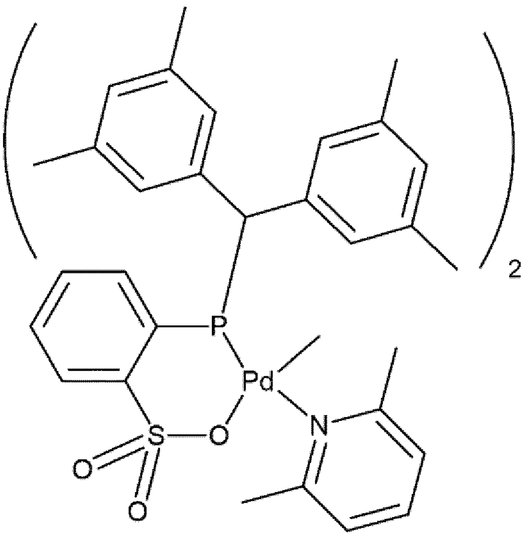

(C3)

[Chem 11]

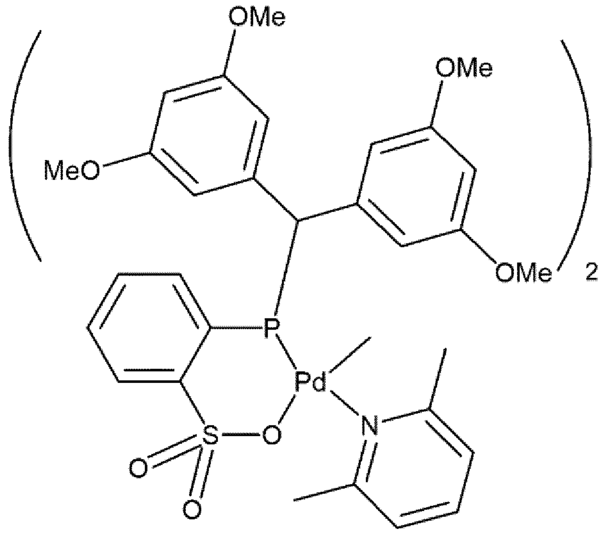

(C4)

The metal complex represented by general formula (C1) can be synthesized by a method described in known literature (for example, J. Am. Chem. Soc. 2007, 129, 8948). Specifically, a metal complex can be synthesized by reacting a zero-valent or divalent M source with the ligand in general formula (C1).

Examples of the zero-valent M source include tris(dibenzylideneacetone)dipalladium as a palladium source, and tetracarbonylnickel(0): $Ni(CO)_4$ and bis(1,5-cyclooctadiene)nickel as nickel sources.

Examples of the divalent M source include (1,5-cyclooctadiene)(methyl)palladium chloride, palladium chloride, palladium acetate, bis(acetonitrile)dichloropalladium: $PdCl_2(CH_3CN)_2$, bis(benzonitrile)dichloropalladium: $PdCl_2(PhCN)_2$, (N,N,N',N'-tetramethylethylenediamine)dichloropalladium(II): $PdCl_2$(TMEDA), (N,N,N',N'-tetramethylethylenediamine)dimethylpalladium(II): $PdMe_2$(TMEDA), bis(acetylacetonato)palladium(II):Pd(acac)$_2$ (acac = acetylacetonato), and palladium(II) trifluoromethanesulfonate: $Pd(OSO_2CF_3)_2$ as palladium sources, and (allyl)nickel chloride, (allyl)nickel bromide, nickel chloride, nickel acetate, bis(acetylacetonato)nickel(II): Ni(acac)$_2$, (1,2-dimethoxyethane)dichloronickel(II): $NiCl_2$(DME), and nickel(II) trifluoromethanesulfonate: $Ni(OSO_2CF_3)_2$ as nickel sources.

Though the metal complex represented by general formula (C1) can be isolated for use, a metal source containing M can be brought into contact with a ligand precursor in a reaction system and provided to polymerization in situ without isolating a complex. In particular, when $R^5$ in general formula (C1) is a hydrogen atom, it is preferable that a metal source containing zero-valent M be reacted with the ligand precursor and then directly provided to polymerization without isolating a complex.

In this case, the ligand precursor is represented by general formula (C1),

[Chem 12]

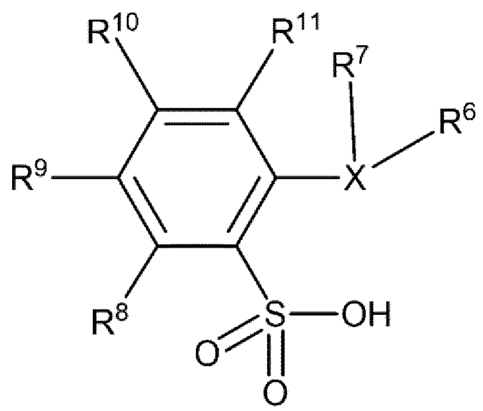

(C1-1)

where the symbols have the same meanings as above.

The ratio ((C1 ligand)/M) of the ligand precursor (C1-1) (C1 ligand) to the M source (M) in general formula (C1) is preferably selected from the range of 0.5 to 2.0, and further preferably from the range of 1.0 to 1.5.

When isolating the metal complex of general formula (C1), one that has been stabilized by coordination with

an electron-donating ligand (L) in advance can be used. In this case, q is 1/2, 1, or 2. As mentioned above, when q is 1/2, it means that one divalent electron-donating ligand is coordinated to two metal complexes. q is preferably 1/2 or 1 in order to stabilize the metal complex catalyst. It should be noted that this means there are no ligands when q is 0.

The metal complex represented by general formula (C1) can also be supported on a carrier and used for polymerization. The carrier in this case is not particularly limited, and examples thereof include inorganic carriers such as silica gel and alumina, and organic carriers such as polystyrene, polyethylene, and polypropylene. Examples of the method for supporting the metal complex include a physical adsorption method in which a carrier is impregnated with a solution of the metal complex and then dried, and a method in which the metal complex and the carrier are chemically bonded and supported.

[Monomer]

In the method for the production of a polymer of the present invention, not only ethylene can be homopolymerized, but also ethylene and an olefin having a polar group can be copolymerized. The olefin having a polar group, which is the second monomer used in the copolymerization in the present invention, is represented by general formula (1):

[Chem 13]

$$CH_2{=\!=}CH{-}\left(CH_2\right)_n{-}R^1 \qquad (1)$$

In the formula, $R^1$ is a substituent selected from the group consisting of a hydroxy group, an alkoxy group having 1 to 10 carbon atoms, an aryloxy group having 6 to 20 carbon atoms, an acyl group having 2 to 10 carbon atoms, an ester group having 2 to 10 carbon atoms (oxycarbonyl group; R-O-(C=O)-, where R is an organic group), an acyloxy group having 2 to 10 carbon atoms, an amino group, a substituted amino group having 1 to 12 carbon atoms, a substituted amide group having 2 to 12 carbon atoms, a substituted pyridyl group having 5 to 10 carbon atoms, a substituted pyrrolidyl group having 4 to 10 carbon atoms, a substituted piperidyl group having 5 to 10 carbon atoms, a substituted hydrofuryl group having 4 to 10 carbon atoms, a substituted imidazolyl group having 4 to 10 carbon atoms, a mercapto group, an alkylthio group having 1 to 10 carbon atoms, an arylthio group having 6 to 10 carbon atoms, an epoxy group, and a halogen atom. n is an integer selected from 0 to 6.

$R^1$ as an alkoxy group having 1 to 10 carbon atoms is preferably an alkoxy group having 1 to 4 carbon atoms, and specific preferable examples include a methoxy group, ethoxy group, isopropoxy group, 1-propoxy group, 1-butoxy group, and t-butoxy group. Among these, a methoxy group, ethoxy group, or isopropoxy group is more preferable, and a methoxy group is particularly preferable.

$R^1$ as an aryloxy group having 6 to 20 carbon atoms is preferably an aryloxy group having 6 to 12 carbon atoms, and specific examples thereof include a phenoxy group, 4-methylphenoxy group, 4-methoxyphenoxy group, 2,6-dimethylphenoxy group, 3,5-di-t-butylphenoxy group, and 2,6-di-t-butylphenoxy group. Among these, a phenoxy group, 3,5-di-t-butylphenoxy group, or 2,6-dimethylphenoxy group is further preferable, and a phenoxy group or 3,5-di-t-butylphenoxy group is particularly preferable.

$R^1$ as an acyl group having 2 to 10 carbon atoms is preferably an acyl group having 2 to 8 carbon atoms, and specific examples thereof include an acetyl group, propionyl group, butyryl group, isobutyryl group, valeryl group, isovaleryl group, pivaloyl group, and benzoyl group. Among these, an acetyl group, pivaloyl group, or benzoyl group is further preferable, and a benzoyl group is particularly preferable.

In an ester group having 2 to 10 carbon atoms (oxycarbonyl group; R-O-(C=O)-, R is an organic group), the organic group R is preferably an alkyl group which may have a functional group such as a hydroxy group or an epoxy group, or an aryl group which may have the functional group described above. $R^1$ is preferably an ester group having 2 to 8 carbon atoms, and specific examples thereof include a methoxycarbonyl group, ethoxycarbonyl group, n-propoxycarbonyl group, isopropoxycarbonyl group, n-butoxycarbonyl group, t-butoxycarbonyl group, (4-hydroxybutoxy)carbonyl group, (4-glycidylbutoxy)carbonyl group, and phenoxycarbonyl group. Among these, a methoxycarbonyl group, ethoxycarbonyl group, or (4-hydroxybutoxy)carbonyl group is further preferable, and a methoxycarbonyl group is particularly preferable.

$R^1$ as an acyloxy group having 2 to 10 carbon atoms is preferably an acyloxy group having 2 to 8 carbon atoms, and specific examples thereof include an acetyloxy group, propionyloxy group, butyryloxy group, isobutyryloxy group, valeryloxy group, isovaleryloxy group, pivaloyloxy group, and benzoyloxy group. Among these, an acetyloxy group, propionyloxy group, or benzoyloxy group is further preferable, and an acetyloxy group or propionyloxy group is particularly preferable.

Preferable specific examples of $R^1$ as a substituted amino group having 1 to 12 carbon atoms include a monomethylamino group, dimethylamino group, monoethylamino group, diethylamino group, monoisopropylamino group, diisopropylamino group, monophenylamino group, diphenylamino group, bis(trimethylsilyl)amino group, and morpholinyl group. Among these, a dimethylamino group or diphenylamino group is further preferable.

In the substituted amide group having 1 to 12 carbon atoms (R-(C=O)NH-, R is an organic group), the organic group R is preferably an alkyl group which may have a functional group such as a hydroxy group or an epoxy group, or an aryl group which may have the functional group described above. Preferable specific examples of $R^1$ include an acetamido group, propionylamino group, butyrylamino group, isobutyrylamino group, valerylamino group, isovalerylamino group, pivaloylamino group, and benzoylamino group. Among these, an acetamido group, propionylamino group, or benzoylamino group is further preferable, and an acetamido group is particularly preferable.

Preferable specific examples of $R^1$ as a substituted pyridyl group having 5 to 10 carbon atoms include a 2-pyridyl group, 3-pyridyl group, 2-(3-methyl)pyridyl group, 2-(4-methyl)pyridyl group, 3-(2-methyl)pyridyl group, 3-(4-methyl)pyridyl group, 2-(4-chloromethyl)pyridyl group, and 3-(4-chloromethyl)pyridyl group. Among these, a 2-pyridyl group, 3-pyridyl group, or 2-(4-methyl)pyridyl group is further preferable, and a 2-pyridyl group is particularly preferable.

Preferable specific examples of $R^1$ as a substituted pyrrolidyl group having 4 to 10 carbon atoms include a 2-pyrrolidyl group, 3-pyrrolidyl group, 2-(1-methyl)pyrrolidyl group, 2-(1-butyl)pyrrolidyl group, 2-(1-cyclopentenyl)pyrrolidyl group, 2-(4-methoxycarbonyl)pyrrolidyl group, 2-(5-methoxycarbonyl)pyrrolidyl group, and 2-(6-methoxycarbonyl)pyrrolidyl group. Among these, a 2-pyrrolidyl group, 3-pyrrolidyl group, 2-(1-methyl)pyrrolidyl group, or 2-(6-methoxycarbonyl)pyrrolidyl group is further preferable, and a 2-pyrrolidyl group is particularly preferable.

Preferable specific examples of $R^1$ as a substituted piperidyl group having 5 to 10 carbon atoms include a 2-piperidyl group, 3-piperidyl group, 2-(1,2,3,6-tetrahydro)piperidyl group, 2-(1-methyl)piperidyl group, 2-(1-ethyl)piperidyl group, 2-(4-methyl)piperidyl group, 2-(5-methyl)piperidyl group, and 2-(6-methyl)piperidyl group. Among these, a 2-piperidyl group, 3-piperidyl group, 2-(1,2,3,6-tetrahydro)piperidyl group, or 2-(6-methyl)piperidyl group is further preferable, and a 2-piperidyl group or 2-(1,2,3,6-tetrahydro)piperidyl group is particularly preferable.

Preferable specific examples of $R^1$ as a substituted hydrofuryl group having 4 to 10 carbon atoms include a 2-tetrahydrofuryl group, 3-tetrahydrofuryl group, 2-(5-methyl)tetrahydrofuryl group, 2-(5-isopropyl)tetrahydrofuryl group, 2-(5-ethyl)tetrahydrofuryl group, 2-(5-methoxy)tetrahydrofuryl group, 2-(5-acetyl)tetrahydrofuryl group, and 2-(4,5-benzo)tetrahydrofuryl group. Among these, a 2-tetrahydrofuryl group, 3-tetrahydrofuryl group, 2-(5-methyl)tetrahydrofuryl group, 2-(5-isopropyl)tetrahydrofuryl group, or 2-(4,5-benzo)tetrahydrofuryl group is more preferable, and a 2-tetrahydrofuryl group, 2-(5-methyl)tetrahydrofuryl group, or 2-(5-isopropyl)tetrahydrofuryl group is particularly preferable.

Preferable specific examples of $R^1$ as a substituted imidazolyl group having 4 to 10 carbon atoms include a 2-imidazolyl group, 2-(1-methyl)imidazolyl group, 2-(1-benzyl)imidazolyl group, 2-(1-acetyl)imidazolyl group, 2-(4,5-benzo)imidazolyl group, and 2-(1-methyl-4,5-benzo)imidazolyl group. Among these, a 2-imidazolyl group, 2-(1-methyl)imidazolyl group, or 2-(4,5-benzo)imidazolyl group is further preferable, and a 2-(1-methyl)imidazolyl group or 2-(4,5-benzo)imidazolyl group is particularly preferable.

Preferable specific examples of $R^1$ as an alkylthio group having 1 to 10 carbon atoms include a methylthio group, ethylthio group, propylthio group, and t-butylthio group. Preferable examples of $R^1$ as an arylthio group having 6 to 10 carbon atoms include a phenylthio group. Among these, a methylthio group, t-butylthio group, or phenylthio group is further preferable, and a methylthio group or phenylthio group is particularly preferable.

Preferable specific examples of $R^1$ as a halogen atom include a fluorine atom, a chlorine atom, and a bromine atom. Among these, a chlorine atom is further preferable.

Among these preferable groups as $R^1$, an alkoxy group having 1 to 10 carbon atoms, an ester group having 2 to 10 carbon atoms, or an acyloxy group having 2 to 10 carbon atoms is further preferable.

The value of n in general formula (1) is preferably 0 or 1, and more preferably 1.

Specific examples of particularly preferable polar comonomers represented by general formula (1) include methyl acrylate, ethyl acrylate, allyl acetate, and allyl methyl ether.

In the method for the production of a (co)polymer of the present invention, two or more olefins having a polar group represented by general formula (1) for use in copolymerization with ethylene may be polymerized in combination.

In the method for the production of a (co)polymer of the present invention, in addition to ethylene and the olefin having a polar group represented by general formula (1), another monomer (third monomer) may be used. Examples of the third monomer include $\alpha$-olefins such as propylene, 1-butene, 1-pentene, 1-hexene, 4-methyl-1-pentene, 1-heptene, 1-octene, 1-nonene, 1-decene, and styrene. Among these, propylene, 1-butene, or 1-hexene is preferable. Two or more of these third monomers may be polymerized in combination. However, when an $\alpha$-olefin is copolymerized as the third monomer, the ratio of the $\alpha$-olefin to the total of the $\alpha$-olefin and ethylene contained in the obtained polymer is less than 40 mol%.

[Polymerization Method]

The method of polymerizing ethylene alone or ethylene and the monomer represented by general formula (1)

using the metal complex of the present invention as a catalyst is not particularly limited, and may be any commonly used polymerization method. Specifically, process methods such as solution polymerization, suspension polymerization, and gas phase polymerization can be used, and solution polymerization and suspension polymerization are particularly preferable. The mode of polymerization can be batchwise or continuous. Polymerization can be carried out either in one stage or in multiple stages.

Two or more metal complex catalysts represented by general formula (C1) may be used in combination in the polymerization reaction. By using a mixture of metal complex catalysts, it is possible to control the molecular weight, molecular weight distribution, and content of monomer units derived from the monomer of general formula (1) of the polymer, whereby a polymer which is suitable for the desired applications can be obtained. The molar ratio of the total amount of monomer to the total amount of metal complex catalyst, as a monomer/metal complex ratio, is conventionally in the range of 1 to 10,000,000, preferably in the range of 10 to 1,000,000, and more preferably in the range of 100 to 100,000.

The polymerization temperature is not particularly limited, and is conventionally in the range of -30 to 400 °C, preferably in the range of 0 to 200 °C, and more preferably in the range of 30 to 180 °C.

The polymerization pressure in which ethylene pressure accounts for majority of the internal pressure is within the range of normal pressure to 100 MPa, preferably within the range of normal pressure to 20 MPa, and more preferably within the range of normal pressure to 10 MPa.

The polymerization time can be appropriately adjusted in accordance with the process mode and the polymerization activity of the catalyst, and can be as short as several tens of seconds to several minutes, or as long as several thousand hours.

In order to prevent a decrease in the activity of the catalyst, the atmosphere in the polymerization system is preferably filled with an inert gas such as nitrogen gas or argon in such a manner that air, oxygen, and moisture other than the monomers are not mixed therein. In the case of solution polymerization, it is possible to use an inert solvent in addition to the monomer. Examples of inert solvents include, but are not limited to, aliphatic hydrocarbons such as isobutane, pentane, hexane, heptane, and cyclohexane; aromatic hydrocarbons such as benzene, toluene, and xylene; halogenated aliphatic hydrocarbons such as chloroform, methylene chloride, carbon tetrachloride, dichloroethane, and tetrachloroethane; halogenated aromatic hydrocarbons such as chlorobenzene, dichlorobenzene, and trichlorobenzene; aliphatic esters such as methyl acetate and ethyl acetate; and aromatic esters such as methyl benzoate and ethyl benzoate.

## EXAMPLES

The present invention will be described in further detail below with reference to Examples and Comparative Examples, but the present invention is not limited to the following examples.

### [Polymer Structure Analysis Method]

The number average molecular weight and weight average molecular weight of a (co)polymer were calculated by size exclusion chromatography (solvent: 1,2-dichlorobenzene, temperature: 145 °C, detector: RI), with polystyrene as the molecular weight standard, using a high-temperature GPC apparatus HLC-8121GPC/HT manufactured by Tosoh Corporation with AT-806MS columns (two in series) manufactured by Showa Denko K.K.

Using a JNM-ECS400 manufactured by JEOL Ltd., the content of monomer units derived from the olefin having a polar group represented by general formula (1) was determined by $^1$H-NMR at 120 °C using 1,1,2,2-tetrachloroethane-d2 as the solvent.

### [Synthesis of Metal Complex 1]

Metal complex 1 was synthesized according to the reaction general formula below.

[Chem 14]

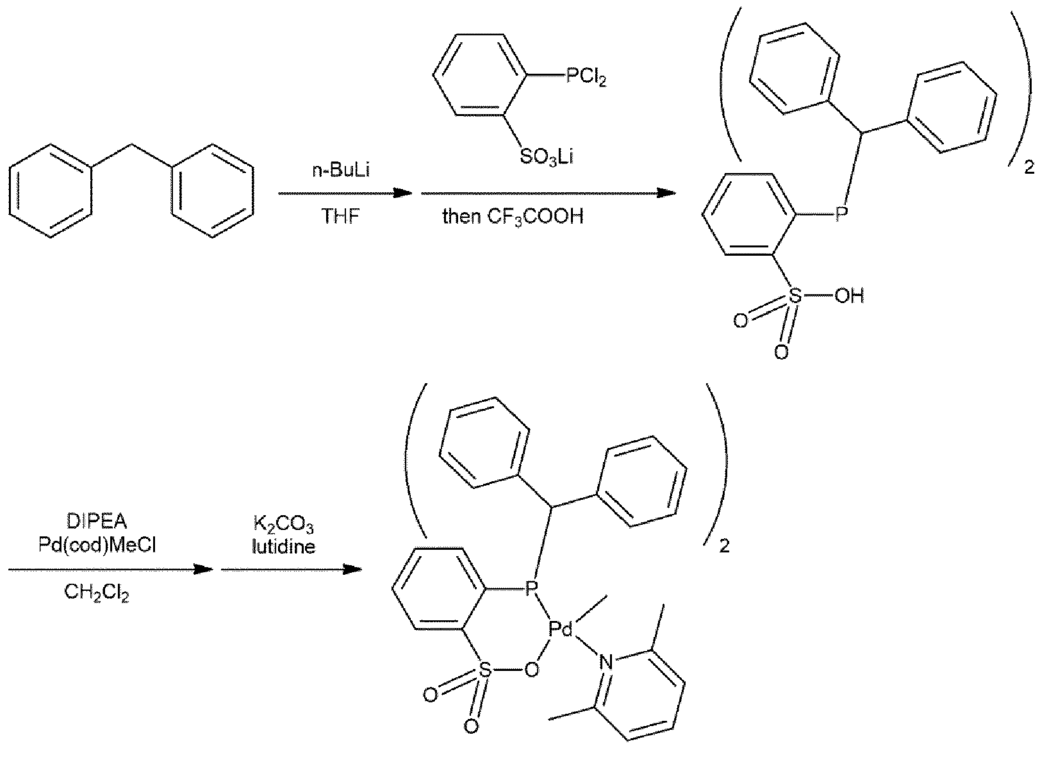


Metal Complex 1

(a) Synthesis of Bis(diphenylmethyl)phosphinobenzenesulfonic Acid

Diphenylmethane (5.70 g, 33.9 mmol) and dehydrated tetrahydrofuran (150 mL) were added to an eggplant flask under a nitrogen gas and stirred in an ice bath. Normal butyl lithium (1.6 M hexane solution, 17.7 mL, 28.3 mmol, 2.5 equivalents) was added dropwise thereto (the solution turned orange), and stirring was continued for 1.5 hours in an ice bath. This eggplant flask was cooled to -78 °C in a dry ice/ethanol bath, and a solution of lithium 2-dichlorophosphinobenzenesulfonate (3.0 g, 11.3 mmol, 1 equivalent) in dehydrated tetrahydrofuran (30 mL) was added thereto. Stirring was continued for 15 hours while gradually raising the temperature to room temperature. After quenching with trifluoroacetic acid (3.2 g, 28.3 mmol, 2.5 equivalents), liquid separation was performed using methylene chloride and distilled water in the air atmosphere. After extraction with methylene chloride, the organic layer was washed with a saturated aqueous sodium chloride solution, dried over magnesium sulfate, and then filtered. The solvent was distilled off using a rotary evaporator to obtain 7.1 g of a yellow viscous liquid. When the obtained liquid was dissolved in methylene chloride and hexane was added, it separated into two layers, and the hexane layer was removed by decanting. This was again dissolved in methylene chloride and the same decanting operation was performed. After the obtained residue was distilled off under reduced pressure, reprecipitation was performed with methylene chloride, diethyl ether, and hexane to obtain 2.79 g of bis(diphenylmethyl)phosphinobenzenesulfonic acid as a solid (yield: 35%).

$^{31}P$-NMR (162 MHz, $CDCl_3$): δ42.7.

(b) Synthesis of Metal Complex 1

The bis(diphenylmethyl)phosphinobenzenesulfonic acid (591 mg, 1.13 mmol), N,N-diisopropylethylamine (DIPEA, 1.46 g, 11.3 mmol, 10 equivalents), and methylene chloride (15 mL) were added to an eggplant flask under nitrogen gas and stirred. Pd(cod)MeCl (cod = 1,5-cyclooctadiene, 300 mg, 1.13 mmol, 1 equivalent) was added thereto, and the mixture was stirred at room temperature for 1 hour. After concentrating the solution, the residue was dissolved in methylene chloride (10 mL), and potassium carbonate (1.56 g, 11.3 mmol, 10 equivalents) and 2,6-lutidine (1.21 g, 11.3 mmol, 10 equivalents) were added to this solution and stirred at room temperature for 1 hour. The reaction solution was filtered through a pad of Celite (dried diatomaceous earth) and Florisil (magnesium silicate), and the solvent was

then concentrated. The obtained residue was purified by simple column chromatography in the order of (1) hexane/methylene chloride (3/1) -> methylene chloride, (2) methylene chloride/diethyl ether (2/1), (3) tetrahydrofuran using a 30 mL disposable syringe filled with 15 mL of Florisil while changing the eluent. After concentrating fractions (1) and (2) together, metal complex 1 was obtained by recrystallizing from methylene chloride, diethyl ether, and hexane (yield: 13%).

$^{1}$H-NMR (400 MHz, $CDCl_3$): δ8.18 (dd, J = 7.8, 3.8 Hz, 1H), 7.82 (d, J = 7.2 Hz, 4H), 7.50 (t, J = 7.4 Hz, 1H), 7.42 (d, J = 7.2 Hz, 4H), 7.35 (t, J = 7.6 Hz, 4H), 7.24 (d, J = 7.6 Hz, 2H), 7.24-7.15 (m, 1H), 7.17 (t, J = 7.4 Hz, 4H), 7.11 (d, J = 6.8 Hz, 2H), 7.02 (d, J = 7.6 Hz, 2H), 6.55 (t, J = 7.6 Hz, 1H), 5.90 (t, J = 7.4 Hz, 1H), 4.96(d, J = 11.6 Hz, 2H), 2.87 (s, 6H), -0.76 (d, J = 2.0 Hz, 3H).

$^{31}$P-NMR (162 MHz, $CDCl_3$): δ36.1.

[Synthesis of Metal Complex 2]

Metal complex 2 was synthesized according to the reaction general formula below.

[Chem 15]

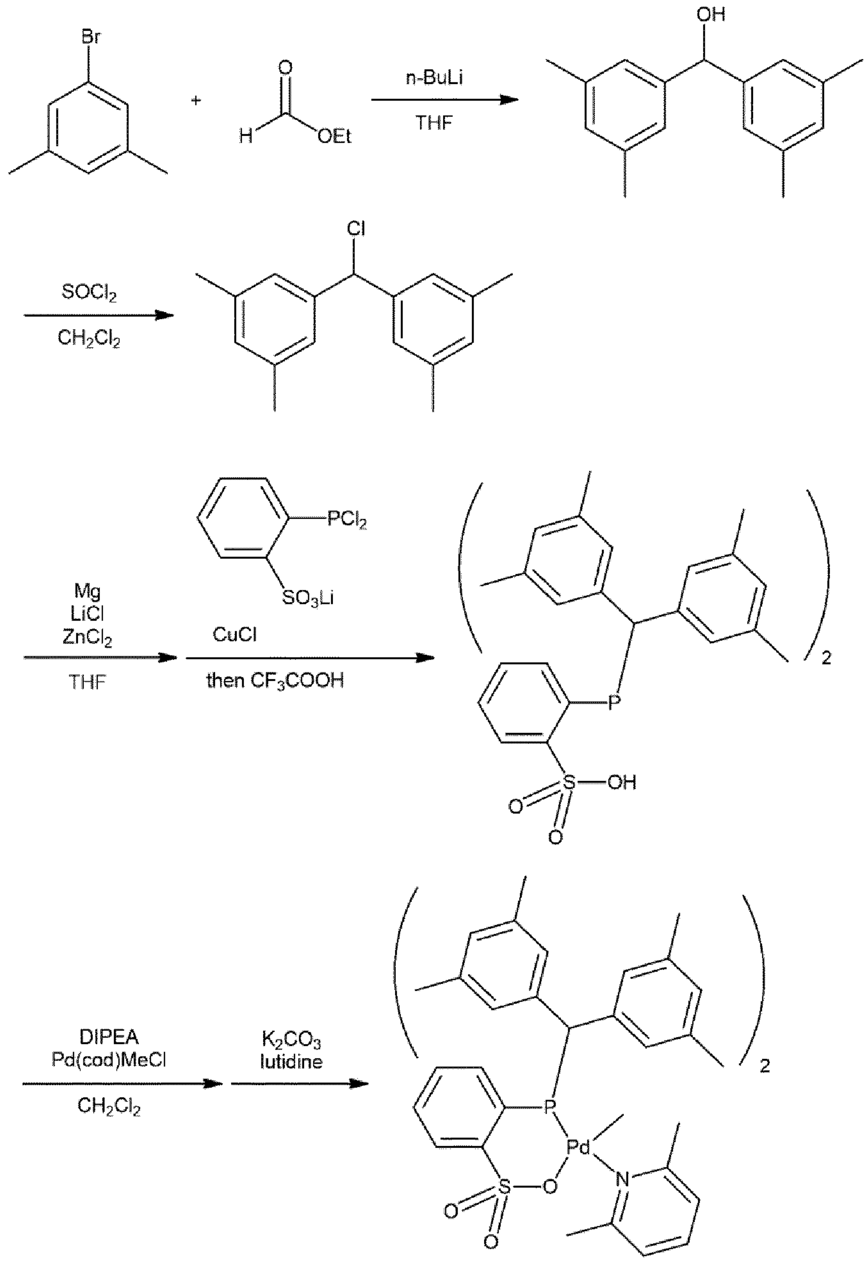


Metal Complex 2

(c) Synthesis of Bis(3,5-dimethylphenyl)methanol

3,5-dimethylbromobenzene (13.9 g, 75 mmol, 2 equivalents) and dehydrated tetrahydrofuran (150 mL) were added to a three-necked reaction vessel under nitrogen gas, and the mixture was cooled to -78 °C. Normal butyl lithium (1.6 M hexane solution, 50 mL, 80 mmol, 2.1 equivalents) was added dropwise thereto and stirred for 1 hour (the solution changed from transparent to translucent white cream color). Ethyl formate (2.81 g, 38 mmol) was added thereto, and the mixture was stirred overnight while gradually raising the temperature from -78 °C to room temperature. After the reaction solution was quenched with a saturated aqueous ammonium chloride solution, the solvent tetrahydrofuran was distilled off. The remaining oily liquid was extracted with methylene chloride and water. After drying the organic layer over sodium sulfate, the solvent was distilled off using an evaporator, and the remaining oily liquid was reprecipitated with hexane to obtain 7.39 g of white needle-like solids (yield: 81%).

$^1$H-NMR (400 MHz, $CDCl_3$): δ7.0 (s, 4H), 6.9 (s, 2H), 5.7 (d, J = 3.2 Hz, 1H), 2.3 (s, 12H), 2.1 (d, J = 3.4 Hz, 1H).

(d) Synthesis of Chlorobis(3,5-dimethylphenyl)methane

Bis(3,5-dimethylphenyl)methanol (4.6 g, 19 mmol) and methylene chloride (70 mL) were added to a two-necked eggplant flask under nitrogen gas, and the mixture was stirred in an ice bath. Thionyl chloride (4.75 g, 40 mmol, 2 equivalents) was added thereto and stirred for 2 hours (the solution changed from transparent to pale yellow). After the reaction solution was quenched with an aqueous sodium bicarbonate solution, methylene chloride was distilled off using an evaporator, and the mixture was extracted with hexane and water. After drying the organic layer over sodium sulfate, the solvent was distilled off using an evaporator to obtain 5.00 g of a white solid (yield: 95%).

$^1$H-NMR (400 MHz, $CDCl_3$): $\delta$7.0 (s, 4H), 6.9 (s, 2H), 6.0 (s, 1H), 2.3 (s, 12H).

(e) Synthesis of Bis[bis(3,5-dimethylphenyl)methyl]phosphinobenzenesulfonic Acid

Magnesium (1.17 g, 48.3 mmol, 16 equivalents), lithium chloride (0.5 M tetrahydrofuran solution) (48 mL, 24.2 mmol, 8.0 equivalents), and zinc chloride (1.0 M tetrahydrofuran solution) (21 mL, 21.2 mmol, 7.0 equivalents) were added to a two-necked reaction vessel under nitrogen gas and stirred in an ice bath. Chlorobis(3,5-dimethylphenyl)methane (5.00 g, 19.3 mmol, 6.4 equivalents) was added dropwise thereto, and the mixture was stirred at 45 °C for 5 hours while gradually increasing the temperature from room temperature (the solution changed from grayish-white to greenish-black).

Lithium 2-dichlorophosphinobenzenesulfonate (0.80 g, 3 mmol), CuCl (0.03 g, 0.3 mmol, 0.1 equivalents), and tetrahydrofuran (20 mL) were added to another three-necked flask under nitrogen gas and stirred at room temperature for several minutes. The solution prepared in the two-necked reaction vessel was added dropwise thereto, and the mixture was further stirred at room temperature overnight. After quenching with trifluoroacetic acid (4 mL, 17 equivalents), liquid separation was performed using methylene chloride and distilled water in the atmosphere. After extraction with methylene chloride, the organic layer was washed with a saturated aqueous sodium chloride solution and dried over sodium sulfate. The solvent was distilled off from the liquid phase obtained after drying using a rotary evaporator to obtain a yellow viscous liquid. The obtained liquid was dissolved in methylene chloride and then reprecipitated with hexane to obtain 0.3 g of a white solid (yield: 16%).

$^{31}$P-NMR (162 MHz, $CDCl_3$): $\delta$42.9.

(f) Synthesis of Metal Complex 2

Bis[bis(3,5-dimethylphenyl)methyl]phosphinobenzenesulfonic acid (300 mg, 0.47 mmol), N,N-diisopropylethylamine (DIPEA, 0.32 mL, 1.9 mmol, 4 equivalents), and methylene chloride (6 mL) were added to an eggplant flask under nitrogen gas and stirred. Pd(cod)MeCl (cod = 1,5-cyclooctadiene, 127 mg, 0.48 mmol, 1 equivalent) was added thereto, and the mixture was stirred at room temperature for 1 hour. After concentrating the solution, the residue was dissolved in methylene chloride (8 mL), and potassium carbonate (0.26 g, 1.9 mmol, 4 equivalents) and 2,6-lutidine (0.22 mL, 1.9 mmol, 4 equivalents) were added to this solution and stirred at room temperature for 1 hour. This reaction solution was filtered through a pad of Celite (dried diatomaceous earth), and then extracted with methylene chloride and water. After drying the organic layer over sodium sulfate, the solvent was distilled off using an evaporator. The obtained residue was purified by simple column chromatography in the order of (1) hexane/methylene chloride (3/1), (2) ethyl acetate, and (3) tetrahydrofuran using a 30 mL disposable syringe filled with 15 mL of Florisil while changing the eluent. The fraction (2) was concentrated together and then recrystallized from methylene chloride and hexane to obtain 35 mg of a white solid (yield: 10%).

$^1$H-NMR (400 MHz, $CDCl_3$): $\delta$8.19-8.15 (m, 1H), 7.49 (t, J = 7.6 Hz, 1H), 7.34 (s, 4H), 7.22 (t, J = 7.6 Hz, 1H), 7.03-7.02 (m, 6H), 6.85 (s, 2H), 6.71 (s, 2H), 6.68 (t, J = 7.2 Hz, 1H), 6.09 (t, J = 8.0 Hz, 1H), 4.64 (d, J = 12.4 Hz, 2H), 2.91 (s, 6H), 2.31 (s, 12H), 2.16 (s, 12H), -0.52 (s, 3H).

$^{31}$P-NMR (162 MHz, $CDCl_3$): $\delta$32.0.

[Synthesis of Metal Complex 3]

Metal complex 3 was synthesized according to the reaction general formula below.

[Chem 16]

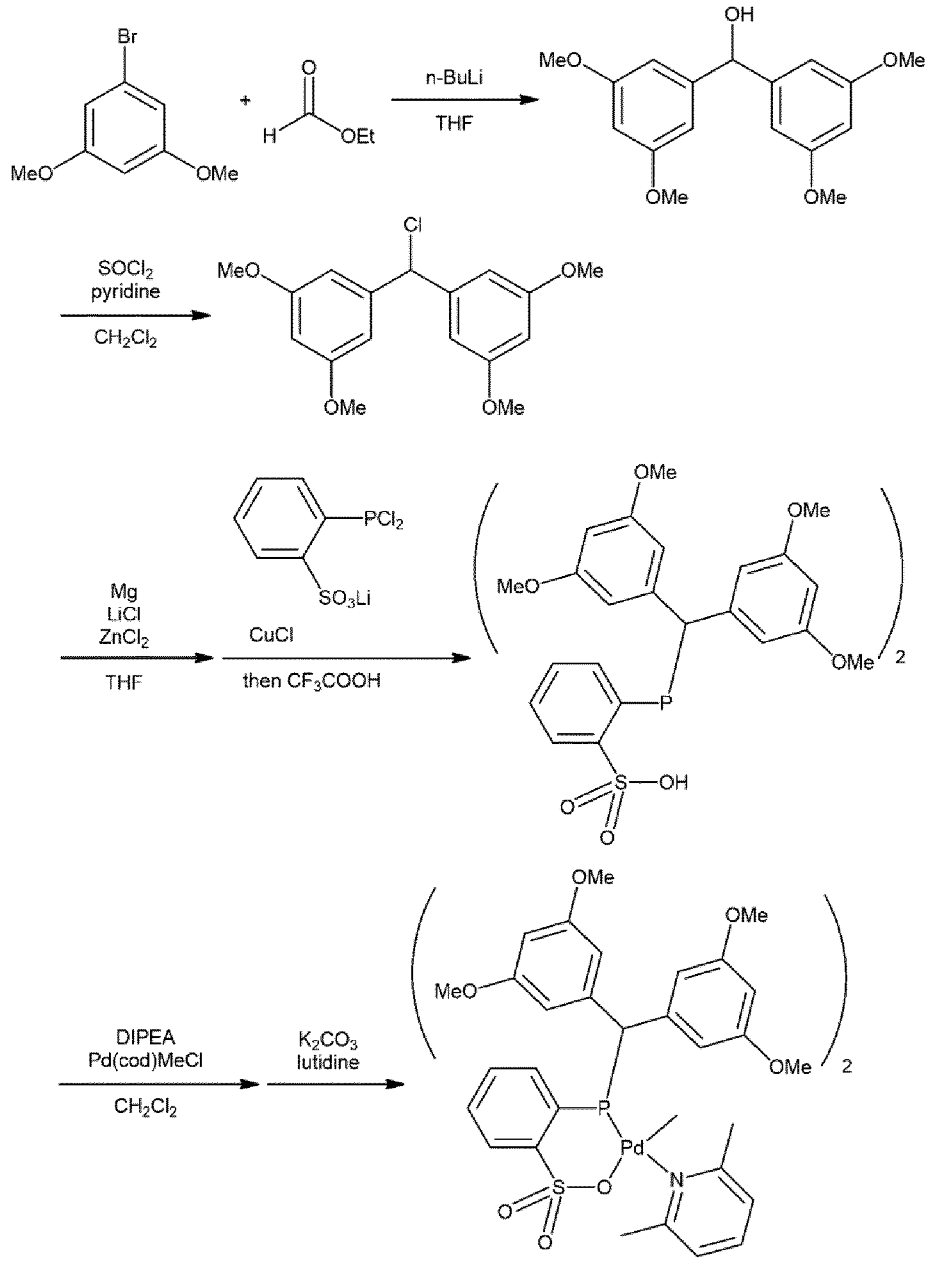


Metal Complex 3

(g) Synthesis of Bis(3,5-dimethoxyphenyl)methanol

3,5-dimethoxybromobenzene (6.51 g, 30 mmol, 2 equivalents) and dehydrated tetrahydrofuran (60 mL) were added to a three-necked reaction vessel under nitrogen gas and cooled to -78 °C. Normal butyl lithium (1.6 M hexane solution, 20.6 mL, 33 mmol, 2.2 equivalents) was added dropwise thereto and stirred for 2 hours (the solution changed from transparent to translucent light yellow). Ethyl formate (1.1 g, 15 mmol) was added thereto, and the mixture was stirred overnight while gradually raising the temperature from -78 °C to room temperature. After the reaction solution was quenched with a saturated aqueous ammonium chloride solution, the solvent tetrahydrofuran was distilled off. The remaining oily liquid was extracted with diethyl ether and water, washed with a saturated aqueous sodium chloride solution, and the organic layer was dried over sodium sulfate and the solvent was distilled off using an evaporator. By adding hexane to the remaining oily liquid and refrigerating it overnight, a solid precipitated, which was collected by suction filtration to obtain 3.85 g of a white solid (yield: 95% or more).

$^1$H-NMR (400 MHz, $CDCl_3$): δ6.5 (d, J = 1.6 Hz, 4H), 6.3 (t, J = 2.4 Hz, 2H), 5.6 (d, J=3.2 Hz, 1H), 3.8 (s, 12H), 2.1 (d, J=3.6 Hz, 1H)

(h) Synthesis of Chlorobis(3,5-dimethoxyphenyl)methane

Bis(3,5-dimethoxyphenyl)methanol (3.85 g, 12.7 mmol), tetrahydrofuran (50 mL), and pyridine (3.5 g, 45 mmol, 3.5 equivalents) were added to a three-necked reaction vessel under nitrogen gas and stirred in an ice bath. Thionyl chloride (2.7 g, 22.4 mmol, 1.8 equivalents) was added thereto and stirred for 1 hour (the solution changed from transparent to pale yellow). The reaction solution was quenched with diluted hydrochloric acid and immediately extracted with methylene chloride. The organic layer was washed with a saturated aqueous sodium bicarbonate solution, dried over sodium sulfate, and the solvent was then distilled off using an evaporator to obtain 4.2 g of an orange oily liquid (yield: 95% or more).

$^1$H-NMR (400 MHz, $CDCl_3$): δ6.5 (d, J = 2.0 Hz, 4H), 6.3 (t, J = 2.2 Hz, 2H), 5.9 (s, 1H), 3.8 (s, 12H).

(i) Synthesis of Bis[bis(3,5-dimethoxyphenyl)methyl]phosphinobenzenesulfonic Acid

Magnesium (0.37 g, 15 mmol, 11.5 equivalents), lithium chloride (1 M tetrahydrofuran solution) (8 mL, 8 mmol, 6.2 equivalents), and zinc chloride (0.5 M tetrahydrofuran solution) (14 mL, 7 mmol, 5.4 equivalents) were added to a two-necked reaction vessel under nitrogen gas and stirred under an ice bath. Chlorobis(3,5-dimethoxyphenyl)methane (1.72 g, 5.3 mmol, 4.0 equivalents) was added thereto, and the mixture was stirred at room temperature for 8 hours while gradually increasing the temperature from 0 °C (the solution changed from grayish white to greenish black).

Lithium 2-dichlorophosphinobenzenesulfonate (0.34 g, 1.3 mmol), CuCl (0.013 g, 0.13 mmol, 0.1 equivalent), and tetrahydrofuran (6 mL) were added to another three-necked flask under nitrogen gas and stirred at room temperature for several minutes. The solution prepared in the two-necked reaction vessel was added dropwise thereto, and the mixture was further stirred at room temperature overnight. Trifluoroacetic acid was added until the pH of the solution became lower than 3, and the liquid was separated using methylene chloride and distilled water in the atmosphere. After drying the organic layer over sodium sulfate, the solvent was distilled off using a rotary evaporator to obtain a yellow viscous liquid. The obtained liquid was dissolved in methylene chloride and reprecipitated with hexane to obtain 0.1 g of a white solid (yield: 10%).

$^{31}$P-NMR (162 MHz, $CDCl_3$): δ42.2.

(j) Synthesis of Metal Complex 3

Bis[bis(3,5-dimethoxyphenyl)methyl]phosphinobenzenesulfonic acid (0.1 g, 0.13 mmol), N,N-diisopropylethylamine (DIPEA, 0.052 g, 0.4 mmol, 3 equivalents), and methylene chloride (3 mL) were added to an eggplant flask under nitrogen gas and stirred. Pd(cod)MeCl (cod = 1,5-cyclooctadiene, 0.04 g, 0.15 mmol, 1.2 equivalents) was added thereto, and the mixture was stirred at 0 °C for 3 hours. After concentrating the solution, the residue was dissolved in methylene chloride (3 mL), and potassium carbonate (0.055 g, 0.4 mmol, 3 equivalents) and 2,6-lutidine (0.043 g, 0.4 mmol, 3 equivalents) were added to this solution and stirred at room temperature overnight. The reaction solution was filtered through a pad of Celite (dried diatomaceous earth), the solvent was distilled off, and the obtained residue was reprecipitated with methylene chloride and hexane. The obtained brown solid was purified by simple column chromatography in the order of (1) methylene chloride, (2) ethyl acetate, (3) tetrahydrofuran using a 30 mL disposable syringe filled with 15 mL of Florisil while changing the eluent. The fraction (2) was concentrated together and then recrystallized from methylene chloride and hexane to obtain 0.033 g of a white solid (yield: 25%).

$^1$H -NMR (400 MHz, $CDCl_3$): δ8.14 (dq, J = 4.7, 1.2 Hz, 1H), 7.48 (t, J = 7.6 Hz, 1H), 7.01 (d, J = 7.6 Hz, 2H), 6.89 (s, 4H), 6.71 (t, J = 7.6 Hz, 1H), 6.53 (d, J = 1.2 Hz, 4H), 6.31 (s, 3H), 6.21-6.17 (m, 3H), 4.85 (d, J = 12.4 Hz, 2H), 3.77 (s, 12H), 3.60 (s, 12H), 2.88 (s, 6H), -0.53 (d, J = 2.4 Hz, 3H)

$^{31}$P-NMR (162 MHz, $CDCl_3$): δ33.6.

[Synthesis of Comparative Metal Complexes 1 to 3]

(k) Synthesis of Comparative Metal Complex 1

Comparative metal complex 1 represented by the following general formula was synthesized in accordance with the method described in JP 2011-68881 A.

(l) Synthesis of Comparative Metal Complex 2

Comparative metal complex 2 represented by the following general formula was synthesized in accordance with the method described in JP 2014-159540 A.

(m) Synthesis of Comparative Metal Complex 3

Comparative metal complex 3 represented by the following general formula was synthesized in accordance with the method described in WO 2020/175482.

[Chem 19]

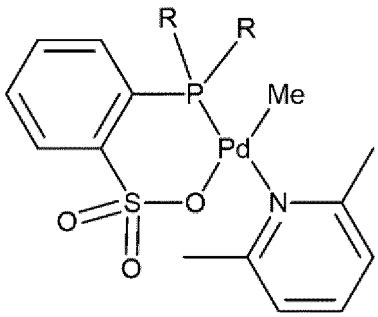

R =

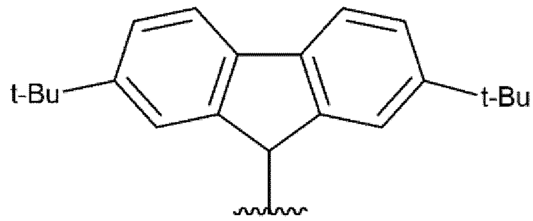

[Polymer Synthesis]

Olefin (co)polymerization was performed using metal complexes 1 to 3 and comparative metal complexes 1 to 3 synthesized by the methods described above. The polymerization conditions and polymerization results are shown in Tables 1 and 2, respectively. It should be noted that the catalyst concentrations, productivities, and catalytic activities were calculated using the following general formula.

(a) When the polar group-containing monomer is not included, or when the polar group-containing monomer is a gas at room temperature

[Math 1]

$$\underset{\text{(mmol/L)}}{\text{Catalyst concentration}} = \frac{\text{Amt of substance of metal complex catalyst used}}{\text{Solvent volume (mL)}} \times 1000$$

(b) When the polar group-containing monomer is liquid at room temperature

[Math 2]

$$\underset{\text{(mmol/L)}}{\text{Catalyst concentration}} = \frac{\text{Amt of substance of metal complex catalyst used (mmol)} \times 1000}{\text{Solvent volume (mL)} + \text{polar group-containing monomer volume (mL)}}$$

[Math 3]

$$\underset{\text{(g/mmol)}}{\text{Productivity}} = \frac{\text{Obtained polymer yield (g)}}{\text{Amt of substance of metal complex catalyst used (mmol)}}$$

[Math 4]

$$\text{Catalytic activity (g/mmol·h)} = \frac{\text{Obtained polymer yield (g)}}{\text{Amt of substance of metal complex catalyst used (mmol)} \times \text{reaction time (h)}}$$

(Example 1): Homopolymerization of Ethylene Using Metal Complex 1 (Preparation of Polymer 1)

Toluene (50 mL) was added to a 120 mL autoclave containing the metal complex 1 (0.075 mg, 0.00010 mmol) under a nitrogen gas atmosphere. After filling with ethylene (3.0 MPa), the autoclave was stirred at 80 °C for 1 hour. After cooling to room temperature, the reaction solution in the autoclave was added to methanol (300 mL) to precipitate a polymer. The obtained polymer was collected by filtration, washed with methanol, and then dried under reduced pressure to obtain polymer 1. The yield was 1.57 g. The productivity was calculated to be 15,700 g/mmol, and the catalytic activity was calculated to be 15,700 g/(mmol·h). The molecular weight of polymer 1 was measured by size exclusion chromatography, and the number average molecular weight Mn was 138,700, the weight average molecular weight Mw was 274,100, and the Mw/Mn was 1.98.

(Example 2): Homopolymerization of Ethylene Using Metal Complex 2 (Preparation of Polymer 2)

Ethylene homopolymerization was carried out in the same manner as described in Example 1, except that the metal complex used was changed to metal complex 2 and the number of moles of the metal complex used was changed as described in Table 1. The polymerization conditions and polymerization results are shown in Tables 1 and 2, respectively.

(Example 3): Homopolymerization of Ethylene Using Metal Complex 3 (Preparation of Polymer 3)

Ethylene homopolymerization was carried out in the same manner as described in Example 1, except that the metal complex used was changed to metal complex 3 and the number of moles of the metal complex used was changed as described in Table 1. The polymerization conditions and polymerization results are shown in Tables 1 and 2, respectively.

(Comparative Examples 1 and 2): Homopolymerization of Ethylene Using Comparative Metal Complexes 1 and 2 (Preparation of Comparative Polymers 1 and 2)

Ethylene homopolymerization was carried out in the same manner as described in Example 1, except that the metal complex used was changed to comparative metal complex 1 or 2, and the number of moles of comparative metal complex 1 or 2 used and the amount of solvent were changed as described in Table 1. The polymerization conditions and polymerization results are shown in Tables 1 and 2, respectively.

(Example 4): Copolymerization of Allyl Acetate and Ethylene Using Metal Complex 1 (Preparation of Polymer 4)

Allyl acetate (75 mL, 698 mmol) as the monomer represented by general formula (1) was added to a 120 mL autoclave containing metal complex 1 (7.5 mg, 0.010 mmol) under a nitrogen gas atmosphere. After filling with ethylene (0.40 MPa), the autoclave was stirred at 65 °C for 24 hours. After cooling to room temperature, the reaction solution in the autoclave was dried under reduced pressure to obtain polymer 4. The yield was 0.503 g. The productivity was calculated to be 50.3 g/mmol, and the catalytic activity was calculated to be 2.10 g/(mmol·h). The molecular weight of polymer 4 was measured by size exclusion chromatography, and the number average molecular weight Mn was 40,400, the weight average molecular weight Mw was 92,200, and the Mw/Mn was 2.28. The allyl acetate content in the copolymer was determined to be an ethylene:allyl acetate molar ratio of 100:24.7 (allyl acetate molar fraction = 19.8%) by $^{1}$H-NMR measurement. The polymerization conditions and polymerization results are shown in Tables 1 and 2, respectively.

(Example 5): Copolymerization of Allyl Acetate and Ethylene Using Metal Complex 3 (Preparation of Polymer 5)

Copolymerization of allyl acetate and ethylene was carried out in the same manner as described in Example 4, except that the metal complex used was changed to metal complex 3 and the ethylene pressure was changed as described in Table 1. The polymerization conditions and polymerization results are shown in Tables 1 and 2, respectively.

(Example 6): Copolymerization of Allyl Acetate and Ethylene Using Metal Complex 1 (Preparation of Polymer 6)

Allyl acetate and ethylene were copolymerized in the same manner as in Example 4, except that the reaction temperature and ethylene pressure were changed as described in Table 1. The polymerization conditions and polymerization results are shown in Tables 1 and 2, respectively.

(Comparative Examples 3 to 5): Copolymerization of Allyl Acetate and Ethylene using Comparative Metal Complexes 1 to 3 (Preparation of Comparative Polymers 3 to 5)

Copolymerization of allyl acetate and ethylene was carried out in the same manner as described in Example 4, except that the metal complex used was changed to comparative metal complex 1, 2, or 3, and the number of moles of the comparative metal complex used, the amount of allyl acetate used, and the ethylene pressure were changed as described in Table 1. The polymerization conditions and polymerization results are shown in Tables 1 and 2, respectively.

(Comparative Example 6): Copolymerization of Allyl Acetate and Ethylene Using Comparative Metal Complex 3 (Preparation of Comparative Polymer 6)

Copolymerization of allyl acetate and ethylene was carried out in the same manner as described in Example 6, except that the metal complex used was changed to comparative metal complex 3 and the ethylene pressure was changed as described in Table 1. The polymerization conditions and polymerization results are shown in Tables 1 and 2, respectively.

[Table 1]

Table 1

| Example | Catalyst | | | Ethylene | General formula (1) allyl acetate | Solvent | | Catalyst concentration | Reaction temp | Reaction time |
|---|---|---|---|---|---|---|---|---|---|---|
| | Type | mg | mmol | MPa | mL | Type | mL | mmol/L | °C | h |
| Ex 1 | Metal complex 1 | 0.075 | 0.0001 | 3.0 | - | Toluene | 50 | 0.002 | 80 | 1 |
| Ex 2 | Metal complex 2 | 0.170 | 0.0002 | 3.0 | - | Toluene | 50 | 0.004 | 80 | 1 |
| Ex 3 | Metal complex 3 | 0.099 | 0.0001 | 3.0 | - | Toluene | 50 | 0.002 | 80 | 1 |
| Comp Ex 1 | Comp metal complex 1 | 1.0 | 0.0020 | 3.0 | - | Toluene | 50 | 0.040 | 80 | 1 |
| Comp Ex 2 | Comp metal complex 2 | 3.5 | 0.0050 | 3.0 | - | Toluene | 75 | 0.067 | 80 | 1 |
| Ex 4 | Metal complex 1 | 7.5 | 0.010 | 0.40 | 75 | - | - | 0.133 | 65 | 24 |
| Ex 5 | Metal complex 3 | 9.9 | 0.010 | 0.34 | 75 | - | - | 0.133 | 65 | 24 |
| Comp Ex 3 | Comp metal complex 1 | 5.0 | 0.010 | 0.75 | 75 | - | - | 0.133 | 65 | 24 |
| Comp Ex 4 | Comp metal complex 2 | 14 | 0.020 | 0.50 | 150 | - | - | 0.133 | 65 | 24 |
| Comp Ex 5 | Comp metal complex 3 | 9.7 | 0.010 | 0.61 | 75 | - | - | 0.133 | 65 | 24 |
| Ex 6 | Metal complex 1 | 7.5 | 0.010 | 0.25 | 75 | - | - | 0.133 | 40 | 24 |
| Comp Ex 6 | Comp metal complex 3 | 9.7 | 0.010 | 0.37 | 75 | - | - | 0.133 | 40 | 24 |

[Table 2]

Table 2

| Example | Polymer No. | Yield | Productivity | Catalytic activity | Molecular weight | | | Allyl acetate unit content |
|---|---|---|---|---|---|---|---|---|
| | | g | g/mmol | g/(mmol·h) | Mn | Mw | Mw/Mn | mol% |
| Ex 1 | Polymer 1 | 1.57 | 15,700 | 15,700 | 138,700 | 274,100 | 1.98 | 0 |
| Ex 2 | Polymer 2 | 2.90 | 14,500 | 14,500 | 104,300 | 203,400 | 1.95 | 0 |
| Ex 3 | Polymer 3 | 120 | 12,000 | 12,000 | 55,900 | 113,700 | 2.03 | 0 |
| Comp Ex 1 | Comp polymer 1 | 9.67 | 4,840 | 4,840 | 6,100 | 33,000 | 5.41 | 0 |
| Comp Ex 2 | Comp polymer 2 | 2.40 | 480 | 480 | 350,000 | 750,000 | 2.14 | 0 |
| Ex 4 | Polymer 4 | 0.503 | 50.3 | 2.10 | 40,400 | 92,200 | 2.28 | 19.8 |
| Ex 5 | Polymer 5 | 0.616 | 61.6 | 2.57 | 15,500 | 30,800 | 1.99 | 18.2 |
| Comp Ex 3 | Comp polymer 3 | 0.500 | 25.0 | 1.04 | 2,300 | 8,400 | 3.65 | 20.2 |
| Comp Ex 4 | Comp polymer 4 | 0.414 | 20.7 | 0.863 | 26,800 | 65,500 | 2.44 | 20.3 |
| Comp Ex 5 | Comp polymer 5 | 0.510 | 51.0 | 2.13 | 34,600 | 76,900 | 2.22 | 18.9 |
| Ex 6 | Polymer 6 | 1.69 | 170 | 7.08 | 133,300 | 284,200 | 2.13 | 18.5 |
| Comp Ex 6 | Comp polymer 6 | 0.982 | 98.2 | 4.09 | 75,600 | 161,600 | 2.14 | 17.9 |

In the homopolymerization of ethylene, when metal complexes 1 to 3 were used (Examples 1 to 3), productivity, catalytic activity, and weight average molecular weight Mw were significantly improved as compared to when comparative metal complex 1 was used (Comparative Example 1). When comparative metal complex 2 was used (Comparative Example 2), though the weight average molecular weight Mw of the obtained polymer was high, productivity and catalytic activity were insufficient, whereas when metal complexes 1 to 3 were used (Examples 1 to 3), similarly to Comparative Example 2, a polymer having a weight average molecular weight Mw of several hundred thousand with a catalytic activity more than 10-fold higher than that of Comparative Example 2 could be synthesized.

FIG. 1 shows a graph in which the productivity (horizontal axis) and weight average molecular weight Mw (vertical axis) of Examples 4 and 5 and Comparative Examples 3 to 5, in which the catalyst concentration, reaction temperature (65 °C), and reaction time (24 hours) were the same, are plotted. It was discovered that when metal complexes 1 and 3 were used (Examples 4 and 5), productivity and catalytic activity were improved compared to when

comparative metal complexes 1 and 2 were used (Comparative Examples 3 and 4), and in particular, a higher weight average molecular weight Mw was achieved with metal complex 1 (Example 4). When compared with Comparative Example 5, in which comparative metal complex 3 was used, it was found that Example 4 had the same productivity and improved weight average molecular weight Mw and allyl acetate unit content, and in Example 5, productivity and catalytic activity were improved.

When copolymerization of allyl acetate and ethylene was carried out at a reaction temperature of 40 °C, it was found that productivity, catalytic activity, and weight average molecular weight Mw were further improved when metal complex 1 was used (Example 6) as compared to the case in which comparative metal complex 3 was used (Comparative Example 6).

From the above Examples and Comparative Examples, it was found that in the polymerization of an olefin containing an allyl monomer having a polar group, the metal complex catalyst of the present disclosure has a higher catalytic activity than conventional metal complex catalysts, whereby a polymer having a high weight average molecular weight can be obtained. Specifically, the metal complex catalyst of the present disclosure can reduce the production cost of a high molecular weight olefin-based polymer containing an allyl monomer having a polar group.

## Claims

**1.** A catalyst for olefin polymerization, comprising a metal complex represented by general formula (C1):

[Chem 1]

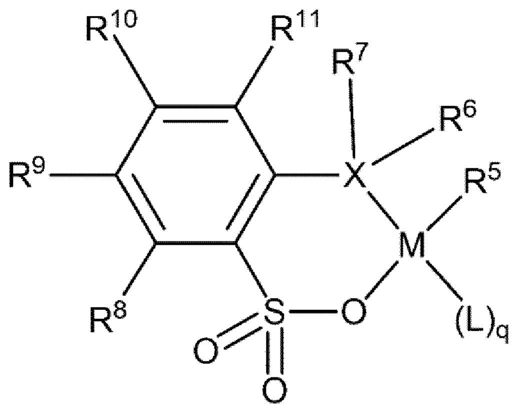

(C1)

where M represents an element of Group 10 of the periodic table; X represents a phosphorus atom (P) or an arsenic atom (As); $R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amide group having 2 to 10 carbon atoms, an alkoxy group having 1 to 30 carbon atoms, an aryloxy group having 6 to 30 carbon atoms, and an acyloxy group having 2 to 10 carbon atoms; $R^6$ and $R^7$ each independently represent an alkoxy group, an aryloxy group, a silyl group, an amino group, or a hydrocarbon group having 1 to 180 carbon atoms which may be substituted with one or more groups selected from a hydroxy group, a halogen atom, an alkoxy group, an aryloxy group, and an acyloxy group; at least one of $R^6$ and $R^7$ is an aralkyl group represented by general formula (2):

[Chem 2]

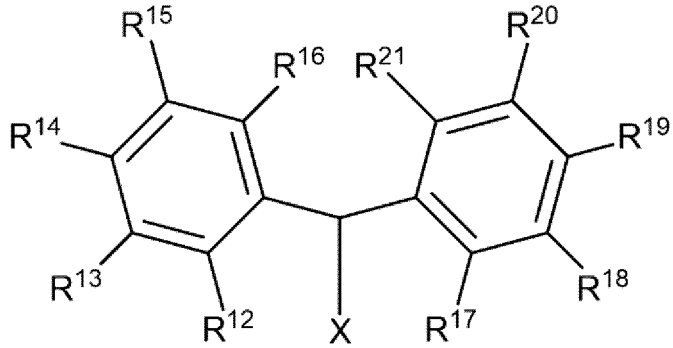

(2)

where $R^{12}$, $R^{13}$, $R^{14}$, $R^{15}$, $R^{16}$, $R^{17}$, $R^{18}$, $R^{19}$, $R^{20}$, and $R^{21}$ each independently represent a substituent selected from the group consisting of a hydrogen atom, a hydroxy group, a halogen atom, a hydrocarbon group having 1 to 10 carbon atoms, a hydrocarbon group having 1 to 10 carbon atoms substituted with a halogen atom, a hydrocarbon group having 2 to 20 carbon atoms substituted with an alkoxy group having 1 to 10 carbon atoms, a hydrocarbon group having 7 to 20 carbon atoms substituted with an aryloxy group having 6 to 10 carbon atoms, an alkoxy group having 1 to 10 carbon atoms, an aryloxy group having 6 to 10 carbon atoms, and an acyloxy group having 2 to 10 carbon atoms (it should be noted that the bond between the carbon atom and X in general formula (C1) is also shown in general formula (2)); $R^8$, $R^9$, $R^{10}$, and $R^{11}$ each independently represent a hydrogen atom, a halogen atom, a hydrocarbon group having 1 to 20 carbon atoms, an alkoxy group having 1 to 8 carbon atoms, an aryloxy group having 6 to 20 carbon atoms, a silyl group substituted with a hydrogen atom or a hydrocarbon group having 1 to 20 carbon atoms, or a hydrocarbon group having 1 to 20 carbon atoms substituted with a halogen atom; L represents an electron-donating ligand; and q is 0, 1/2, 1, or 2.

**2.** The catalyst for olefin polymerization according to claim 1, wherein in general formula (C1), $R^6$ and $R^7$ are the same aralkyl group represented by general formula (2).

**3.** The catalyst for olefin polymerization according to claim 1 or 2, wherein $R^{12}$, $R^{13}$, $R^{14}$, $R^{15}$, $R^{16}$, $R^{17}$, $R^{18}$, $R^{19}$, $R^{20}$, and $R^{21}$ in general formula (2) each independently represent a hydrogen atom, a hydrocarbon group having 1 to 10 carbon atoms, or an alkoxy group having 1 to 10 carbon atoms.

**4.** The catalyst for olefin polymerization according to claim 1 or 2, wherein $R^{13}$, $R^{14}$, $R^{15}$, $R^{18}$, $R^{19}$, and $R^{20}$ in general formula (2) are each independently a hydrogen atom, a hydrocarbon group having 1 to 10 carbon atoms, or an alkoxy group having 1 to 10 carbon atoms, and $R^{12}$, $R^{16}$, $R^{17}$, and $R^{21}$ are each independently a hydrogen atom.

**5.** The catalyst for olefin polymerization according to claim 1 or 2, wherein the aralkyl group represented by general formula (2) is a diphenylmethyl group, a bis(3,5-dimethylphenyl)methyl group, or a bis(3,5-dimethoxyphenyl)methyl group.

**6.** The catalyst for olefin polymerization according to claim 1 or 2, wherein $R^8$, $R^9$, $R^{10}$, and $R^{11}$ in general formula (C1) are all hydrogen atoms.

**7.** A method for the production of: an ethylene homopolymer; a copolymer of ethylene and an olefin containing a polar group represented by general formula (1); or a copolymer of ethylene, an olefin containing a polar group represented by general formula (1), and another monomer, wherein a metal complex represented by general formula (C1) is used as a polymerization catalyst:

[Chem 3]

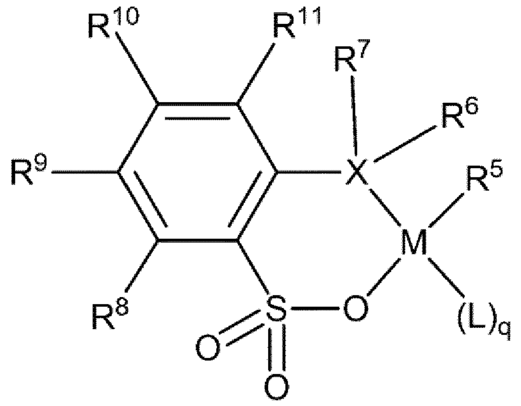

(C1)

where the symbols have the same meanings as in claim 1,

[Chem 4]

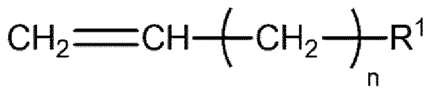

(1)

where $R^1$ is a substituent selected from the group consisting of a hydroxy group, an alkoxy group having 1 to 10 carbon atoms, an aryloxy group having 6 to 20 carbon atoms, an acyl group having 2 to 10 carbon atoms, an ester group having 2 to 10 carbon atoms (oxycarbonyl group; R-O-(C=O)-, where R is an organic group), an acyloxy group having 2 to 10 carbon atoms, an amino group, a substituted amino group having 1 to 12 carbon atoms, a substituted amide group having 2 to 12 carbon atoms, a substituted pyridyl group having 5 to 10 carbon atoms, a substituted pyrrolidyl group having 4 to 10 carbon atoms, a substituted piperidyl group having 5 to 10 carbon atoms, a substituted hydrofuryl group having 4 to 10 carbon atoms, a substituted imidazolyl group having 4 to 10 carbon atoms, a mercapto group, an alkylthio group having 1 to 10 carbon atoms, an arylthio group having 6 to 10 carbon atoms, an epoxy group, and a halogen atom; and n is an integer selected from 0 to 6.

**8.** The method according to claim 7, wherein n in general formula (1) is 0.

**9.** The method according to claim 7, wherein n in general formula (1) is 1.

**10.** The method according to any one of claims 7 to 9, wherein $R^{12}$, $R^{13}$, $R^{14}$, $R^{15}$, $R^{16}$, $R^{17}$, $R^{18}$, $R^{19}$, $R^{20}$, and $R^{21}$ in general formula (2) are each independently a hydrogen atom, a hydrocarbon group having 1 to 10 carbon atoms, or an alkoxy group having 1 to 10 carbon atoms.

**11.** The method according to any one of claims 7 to 9, wherein $R^{13}$, $R^{14}$, $R^{15}$, $R^{18}$, $R^{19}$, and $R^{20}$ in general formula (2) are each independently a hydrogen atom, a hydrocarbon group having 1 to 10 carbon atoms, or an alkoxy group having 1 to 10 carbon atoms, and $R^{12}$, $R^{16}$, $R^{17}$, and $R^{21}$ are each independently a hydrogen atom.

**12.** The method according to any one of claims 7 to 9, wherein the aralkyl group represented by general formula (2) is a diphenylmethyl group, a bis(3,5-dimethylphenyl)methyl group, or a bis(3,5-dimethoxyphenyl)methyl group.

**13.** The method according to any one of claims 7 to 9, wherein $R^8$, $R^9$, $R^{10}$, and $R^{11}$ in general formula (C1) are all hydrogen atoms.

Fig. 1

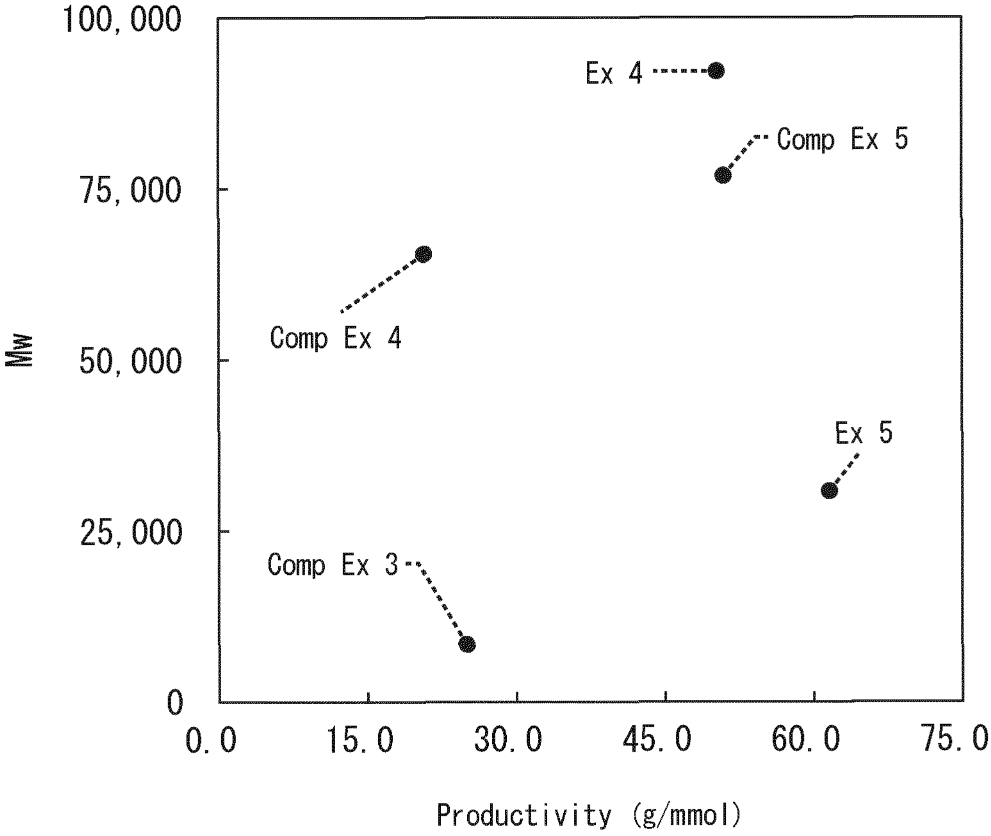
100,000
75,000
50,000
25,000
0
Mw
Ex 4
Comp Ex 5
Comp Ex 4
Ex 5
Comp Ex 3
0.0
15.0
30.0
45.0
60.0
75.0
Productivity (g/mmol)

## INTERNATIONAL SEARCH REPORT

International application No.
**PCT/JP2022/031421**

**A. CLASSIFICATION OF SUBJECT MATTER**

***C08F 4/80***(2006.01)i; ***C08F 10/02***(2006.01)i
FI: C08F4/80; C08F10/02

According to International Patent Classification (IPC) or to both national classification and IPC

**B. FIELDS SEARCHED**

Minimum documentation searched (classification system followed by classification symbols)

C08F4/80; C08F10/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | SEIDEL, Falk William et al. Expedient Synthetic Identification of a P-Stereogenic Ligand Motif for the Palladium-Catalyzed Preparation of Isotactic Polar Polypropylenes. Angew. Chem. int. Ed. 2020, vol. 59, pp. 22591-22601 abstract, Introduction, Results and Discussin (in particular, p. 22593 (scheme 1)) | 1, 3-6 |
| Y | | 7-13 |
| A | | 2 |
| Y | WO 2020/175482 A1 (THE UNIVERSITY OF TOKYO) 03 September 2020 (2020-09-03) claims, examples | 7-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/031421**

| Patent document cited in search report | Publication date (day/month/year) | Patent family member(s) | Publication date (day/month/year) |
|---|---|---|---|
| WO 2020/175482 A1 | 03 September 2020 | US 2022/0089791 A1<br>claims, examples<br>EP 3932955 A1<br>CN 113302213 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011068881 A
- US 8916663 B
- JP 2014159540 A
- US 9499644 B
- JP 2015137282 A
- WO 2019093364 A
- WO 2020175482 A


### Non-patent literature cited in the description


- *Chem. Rev.,* 1958, vol. 58, 808
- *J. Am. Chem. Soc.,* 2011, vol. 133, 1232
- *J. Am. Chem. Soc.,* 2007, vol. 129, 8948